# EUROPEAN PATENT SPECIFICATION

(11) **EP 4 156 760 B1**
(45) Date of publication and mention of the grant of the patent: **18.06.2025**
(21) Application number: 20941038.0
(22) Date of filing: 19.06.2020
(51) Int. Cl.: H04W 24/10, H04L 5/00, H04W 72/20, H04B 7/06, H04W 52/02, H04W 76/15, H04W 76/28

(54) **PHYSICAL DOWNLINK CONTROL CHANNEL (PDCCH) MONITORING METHOD AND APPARATUS**
VERFAHREN UND VORRICHTUNG ZUR ÜBERWACHUNG EINES PHYSIKALISCHEN DOWNLINK-STEUERKANALS (PDCCH)
PROCÉDÉ ET APPAREIL DE SURVEILLANCE D'UN CANAL PHYSIQUE DE COMMANDE DE LIAISON DESCENDANTE (PDCCH)

(43) Date of publication of application: 29.03.2023
(73) Proprietor: GUANGDONG OPPO MOBILE TELECOMMUNICATIONS CORP., LTD., Dongguan, Guangdong 523860 (CN)
(72) Inventor: HU, Yi, Dongguan, Guangdong 523860 (CN); LI, Haitao, Dongguan, Guangdong 523860 (CN)
(74) Representative: Taor, Simon Edward William
(86) International application number: PCT/CN2020/097201
(87) International publication number: WO 2021/253431

(56) References cited:
- EP-A1- 3 836 685
- WO-A1-2020/029798
- CN-A- 109 863 780
- HUAWEI ET AL: "Further discussion on the impact of DCI-based PDCCH skipping", vol. RAN WG2, no. Reno, USA; 20190513 - 20190517, 13 May 2019 (2019-05-13), XP051730356, Retrieved from the Internet <URL:http://www.3gpp.org/ftp/Meetings%5F3GPP%5FSYNC/RAN2/Docs/R2%2D1906904%2Ezip> [retrieved on 20190513]
- "3rd Generation Partnership Project; Technical Specification Group Radio Access Network; NR; Physical layer procedures for control (Release 16)", vol. RAN WG1, no. V16.1.0, 3 April 2020 (2020-04-03), pages 1 - 156, XP051893821, Retrieved from the Internet <URL:ftp://ftp.3gpp.org/Specs/archive/38_series/38.213/38213-g10.zip 38213-g10.docx> [retrieved on 20200403]
- TAO CHEN ET AL: "Discussion on reply LS on PDCCH skipping", vol. 3GPP RAN 1, no. Athens, GR; 20230227 - 20230303, 18 February 2023 (2023-02-18), XP052248748, Retrieved from the Internet <URL:https://www.3gpp.org/ftp/TSG_RAN/WG1_RL1/TSGR1_112/Docs/R1-2301618.zip R1-2301618_Discussion on reply LS on PDCCH skipping.docx> [retrieved on 20230218]
- SAMSUNG: "PDCCH skipping in RRC_CONNECTED and SR", vol. RAN WG2, no. Electronic; 20220509 - 20220520, 25 April 2022 (2022-04-25), XP052138304, Retrieved from the Internet <URL:https://ftp.3gpp.org/tsg_ran/WG2_RL2/TSGR2_118-e/Docs/R2-2204535.zip R2-2204535_PDCCH Skipping in RRC_CONNECTED and SR.doc> [retrieved on 20220425]
- HUAWEI, HISILICON: "Further discussion on the impact of DCI-based PDCCH skipping", 3GPP DRAFT; R2-1906904 FURTHER DISCUSSION ON THE IMPACT OF DCI-BASED PDCCH SKIPPING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, USA; 20190513 - 20190517, 3 May 2019 (2019-05-03), Mobile Competence Centre ; 650, route des Lucioles ; F-06921 Sophia-Antipolis Cedex ; France , XP051711203
- CATT: "Report on [105bis#27][NR/Power Saving] – PDCCH skipping", 3GPP DRAFT; R2-1905665, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, Nevada, USA; 20190513 - 20190517, 3 May 2019 (2019-05-03), Mobile Competence Centre ; 650, route des Lucioles ; F-06921 Sophia-Antipolis Cedex ; France , pages 1 - 24, XP051710021

## Description

### TECHNICAL FIELD

The present disclosure relates to the field of communication, and more particularly, to a Physical Downlink Control Channel (PDCCH) monitoring method and apparatus.

### BACKGROUND

The NR power saving project in 3GPP Rel-17 plans to further study an energy saving scheme of User Equipment (UE) in a connected state in a case where Discontinuous Reception (DRX) is configured, including a scheme of reducing blind detection of a Physical Downlink Control Channel (PDCCH) by UE, one of manners for which is to introduce a PDCCH skipping mechanism, that is, a network can instruct the UE to skip PDCCH monitoring for a period of time by sending dynamic signaling. For the UE configured with the DRX, the UE monitors the PDCCH in DRX active time. In general principles, when the UE receives the PDCCH skipping instructions, the UE should follow the PDCCH skipping instructions, that is, the UE skips the PDCCH monitoring during the subsequent PDCCH skipping duration, even if the UE is in the DRX active time during this PDCCH skipping duration.

Generally, the network can instruct the UE to skip the PDCCH monitoring during a future period when the network determines, based on a downlink service requirement of the UE and an uplink service requirement reported by the UE previously through a Buffer Status Report (BSR), that the UE has no downlink and uplink data transmission requirements during this period, to achieve a purpose of power saving of UE.

However, in some scenarios, the UE itself may trigger uplink transmission and expect a further response from the network. For example, the UE has uplink data arriving but does not have an uplink resource for reporting the BSR and thus triggers a Scheduling Request (SR), or the UE triggers Beam Failure Recovery (BFR). In these cases, the UE needs to monitor the PDCCH, since the UE expects the response from the network. From the perspective of the network, the network can learn the scheduling requirements of the UE only when receiving the uplink transmission from the UE, and the network does not know the scheduling requirements of the UE before receiving the uplink transmission from the UE. However, if the network sends the PDCCH skipping instruction to the UE before receiving the uplink transmission from the UE, from the perspective of the UE, the UE sends the uplink transmission first and enters a state of monitoring the PDCCH, and during this period, the UE receives the PDCCH skipping instruction from the network. In this case, the UE skips the PDCCH monitoring based on the PDCCH skipping instruction of the network. Even the UE may deem that the network does not allocate the resource per the scheduling request, resulting in inconsistent understanding between the network and the terminal. Related technologies are known from patent application publication WO2020/029798A1; HUAWEI ET AL: "Further discussion on the impact of DCI-based PDCCH skipping", 3GPP DRAFT, R2-1906904 FURTHER DISCUSSION ON THE IMPACT OF DCI-BASED PDCCH SKIPPING, 3RD GENERATION PARTNERSHIP PROJECT (3GPP); and "3rd Generation Partnership Project; Technical Specification Group Radio Access Network; NR; Physical layer procedures for control (Release 16)", 3GPP STANDARD; TECHNICAL SPECIFICATION; 3GPP TS38.213, 3RD GENERATION PARTNERSHIP PROJECT (3GPP).

### SUMMARY

Embodiments of the present disclosure provide a Physical Downlink Control Channel (PDCCH) monitoring method and apparatus, so as to at least solve a problem of inconsistent understanding between a network and a terminal in the related art caused by that the terminal device receives a PDCCH skipping instruction sent by the network before receiving a response to a triggered scheduling request or a triggered beam failure recovery from the network.

According to an embodiment of the present disclosure, there are provided Physical Downlink Control Channel (PDCCH) monitoring methods for a terminal device as set out in claims 1-3. Additional features are set out in claims 4-7.

According to an embodiment of the present disclosure, there are provided Physical Downlink Control Channel (PDCCH) monitoring methods for a network device as set out in claims 8 and 9. Additional features are set out in claims 10 and 11.

According to another embodiment of the present disclosure, there is provided a terminal device as set out in claim 12.

According to another embodiment of the present disclosure, there is provided a network device as set out in claim 13.

According to yet another embodiment of the present disclosure, there is further provided a storage medium having a computer program stored thereon, wherein the computer program is configured to carry out steps in any one of the method embodiments described above when running.

Through the present disclosure, the terminal device determines the target serving cell on which the PDCCH monitoring is not skipped according to the configuration information for the scheduling request in combination with the monitoring indication message sent by the network device, instead of determining the serving cell on which the PDCCH monitoring is skipped according to only the monitoring indication message sent by the network device. Therefore, the problem of inconsistent understanding between the network and the terminal in the related art caused by the terminal device receiving the PDCCH skipping instruction sent by the UE before receiving the response to the triggered scheduling request or to the triggered beam failure recovery can be solved, achieving an effect of ensuring a scheduling performance of the UE while taking into account a power saving requirement of the UE.

### BRIEF DESCRIPTION OF THE DRAWINGS

The drawings described herein are used to provide further understanding of the present disclosure and constitute part of the present disclosure. Exemplary embodiments and their description of the present disclosure are used to explain the present disclosure and do not constitute any improper limitation on the present disclosure. In the drawings:
FIG. 1 is a flowchart of a Physical Downlink Control Channel (PDCCH) monitoring method according to an embodiment of the present disclosure;
FIG. 2 is a flowchart of a Physical Downlink Control Channel (PDCCH) monitoring indication according to an embodiment of the present disclosure;
FIG. 3 is a schematic diagram of a first serving cell set based on a scenario of supporting carrier aggregation;
FIG. 4 is a schematic diagram of a first serving cell set based on a scenario of supporting dual connectivity;
FIG. 5 is a schematic diagram of PDCCH monitoring in a DRX cycle based on a first scenario;
FIG. 6 is a schematic diagram of PDCCH monitoring in a DRX cycle based on a third scenario;
FIG. 7 is a schematic diagram of PDCCH monitoring in a DRX cycle based on a fifth scenario;
FIG. 8 is a structural block diagram of a Physical Downlink Control Channel (PDCCH) monitoring apparatus according to an embodiment of the present disclosure;
FIG. 9 is a structural block diagram of a Physical Downlink Control Channel (PDCCH) monitoring indication apparatus according to an embodiment of the present disclosure;
FIG. 10 is a schematic structural diagram of a terminal device according to an embodiment of the present disclosure; and
FIG. 11 is a schematic structural diagram of a network device according to an embodiment of the present disclosure.

### DETAILED DESCRIPTION

Hereinafter, the present disclosure will be described in detail with reference to the drawings and in conjunction with embodiments. It should be noted that the embodiments in the present disclosure and features in the embodiments may be combined with each other without contradiction.

It should be noted that terms "first", "second", etc. in the specification and claims of the present disclosure and the above drawings are used to distinguish similar objects from each other and are not necessarily used to describe a particular order or sequence.

The technical solutions of embodiments of the present disclosure are applicable to various communication systems, for example, a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced LTE (LTE-A) system, a New Radio (NR) system, an evolved system of the NR system, an LTE-based access to unlicensed spectrum (LTE-U) system, an NR-based access to unlicensed spectrum (NR-U) system, a Non-Terrestrial Networks (NTN) system, a Universal Mobile Telecommunication System (UMTS), a Wireless Local Area Network (WLAN), a Wireless Fidelity (WiFi), a 5th-Generation (5G) communication system, or other communication systems.

Generally speaking, a conventional communication system generally supports a limited number of connections and is therefore easy to implement. However, with development of communication technology, a mobile communication system will not only support conventional communication but also support, for example, Device to Device (D2D) communication, Machine to Machine (M2M) communication, Machine Type Communication (MTC), Vehicle to Vehicle (V2V) communication or Vehicle to everything (V2X) communication, etc.. Embodiments of the present disclosure can also be applied to these communication systems.

By way of example but not limitation, in embodiments of the present disclosure, the terminal device may be a wearable device. The wearable device may also be called a wearable intelligent device, which is a general term of wearable devices designed intelligently and developed on daily wear using wearable technology, such as glasses, gloves, a watch, clothing and shoes. The wearable device is a portable device that is worn directly on a body or integrated into user's clothes or accessories. The wearable device is not only a hardware device, but also implements powerful functions through software support, data interaction and cloud interaction. Generalized wearable intelligent device include a device with full features, a large size, and functions all or part of which may be implemented without relying on a smart phone, such as a smart watch or smart glasses, as well as a device that is only focused on a certain application function and needs to be cooperated with other devices such as a smart phone, for example, a smart bracelet and a smart jewelry for various physical sign monitoring.

In embodiments of the present disclosure, the network device may be a device for communicating with a mobile device, or may be an Access Point (AP) in the WLAN, or a Base Transceiver Station (BTS) in GSM or CDMA, or may be a NodeB (NB) in WCDMA, or an Evolutional Node B (eNB or eNodeB) in Long Term Evolution (LTE), or a relay station or an access point, or a vehicle-mounted device, a wearable device, a network device (gNB) in the NR network, a network device in the future evolved PLMN network or a network device in the NTN network.

As an example but not a limitation, in embodiments of the present disclosure, the network device may have a mobile feature, for example, the network device may be a moving device. Optionally, the network device may be a satellite, or a balloon station. For example, the satellite may be a low earth orbit (LEO) satellite, a medium earth orbit (MEO) satellite, a geostationary earth orbit (GEO) satellite, a high octagonal orbit (HEO) satellite, etc.. Optionally, the network device may also be a base station provided on land or in a water area.

In embodiments of the present disclosure, the network device can provide services for a cell, a terminal device communicates with the network device through transmission resources (for example, frequency domain resources, or spectrum resources) used by the cell. The cell may be a cell corresponding to the network device (e.g., a base station), and the cell can belong to a macro base station, or belong to a base station corresponding to a small cell. Here, the small cell may include a metro cell, a micro cell, a pico cell, a femto cell, etc., which have characteristics of small coverage and low transmit power, and are suitable for providing high-speed data transmission services.

In 5G NR, the network can configure a DRX function for the terminal so that the terminal discontinuously monitors a PDCCH, to achieve a purpose of power saving of the terminal. Each Media Access Control (MAC) entity has a DRX configuration, and DRX configuration parameters include:
- drx-onDurationTimer: a duration of awake of the UE at beginning of a DRX Cycle;
- drx-SlotOffset: a delay for the UE to start the drx-onDurationTimer;
- drx-InactivityTimer: a duration for the UE to continue to monitor a PDCCH after receiving a PDCCH indicating uplink initial transmission or downlink initial transmission;
- drx-RetransmissionTimerDL: a maximum duration for the UE to monitor a PDCCH indicating downlink retransmission scheduling. Each downlink HARQ process except for a broadcast Hybrid Automatic Repeat reQuest (HARQ) process corresponds to one drx-RetransmissionTimerDL;
- drx-RetransmissionTimerUL: a maximum duration for the UE to monitor a PDCCH indicating uplink retransmission scheduling. Each uplink HARQ process corresponds to one drx-RetransmissionTimerUL;
- drx-LongCycleStartOffset: which is used to configure a long DTX cycle and a sub-frame offset where the long DRX cycle and a short DRX cycle start;
- drx-ShortCycle: a short DRX cycle, which is an optional configuration;
- drx-ShortCycleTimer: a duration for which the UE is in the short DRX cycle (and has not received any PDCCH), which is an optional configuration;
- drx-HARQ-RTT-TimerDL: a minimum waiting time required for the UE to expect to receive a PDCCH indicating downlink scheduling, and each downlink HARQ process except for the broadcast HARQ process corresponds to one drx-HARQ-RTT-TimerDL; and
- drx-HARQ-RTT-TimerUL: a minimum waiting time required for the UE to expect to receive a PDCCH indicating uplink scheduling, and each uplink HARQ process corresponds to one drx-HARQ-RTT-TimerUL.

If the terminal is configured with the DRX, the terminal needs to monitor the PDCCH during DRX Active Time. The DRX Active Time includes the following situations.
- Any one of the following five timers is running: a drx-onDurationTimer, a drx-InactivityTimer, a drx-RetransmissionTimerDL, a drx-RetransmissionTimerUL, and a ra-ContentionResolutionTimer.
- A SR is sent on the PUCCH and is pending.
- In a contention-based random access procedure, after successfully receiving a random access response, the terminal has not received an initial transmission indicated by the PDCCH scrambled with a Cell Radio Network Temporary Identifier (C-RNTI).

The terminal determines when to start the drx-onDurationTimer according to whether it is currently in the short DRX cycle or the long DRX cycle. Specific specifications are as follows.
1> If the short DRX cycle is used and a current sub-frame satisfies [(SFN×10)+subframe number] modulo (drx-ShortCycle)=(drx-StartOffset) modulo (drx-ShortCycle); or
1> if the long DRX cycle is used and the current sub-frame satisfies [(SFN×10)+subframe number] modulo (drx-LongCycle)=drx-StartOffset:
   2> start the drx-onDurationTimer at a time of drx-SlotOffset slots after beginning of the current sub-frame.

The terminal starts or restarts the drx-InactivityTimer under the following condition:
if the terminal receives a PDCCH indicating downlink or uplink initial transmission, the terminal starts or restarts the drx-InactivityTimer.

The terminal starts and stops the drx-RetransmissionTimerDL under the following conditions.
when the terminal receives a PDCCH indicating downlink transmission, or when the terminal receives a Media Access Control Protocol Data Unit (MAC PDU) on a configured downlink grant resource, the terminal stops the drx-RetransmissionTimerDL corresponding to the HARQ process. The terminal starts the drx-HARQ-RTT-TimerDL corresponding to the HARQ process after completing transmission of feedback for the HARQ process of this downlink transmission.

If a drx-HARQ-RTT-TimerDL corresponding to a certain HARQ of the terminal expires and decoding of downlink data transmitted using this HARQ process is unsuccessful, the terminal starts the drx-RetransmissionTimerDL corresponding to this HARQ process.

The terminal starts and stops the drx-RetransmissionTimerUL under the following conditions.

When the terminal receives a PDCCH indicating uplink transmission, or when the terminal sends a MAC PDU on a configured uplink grant resource, the terminal stops the drx-RetransmissionTimerUL corresponding to the HARQ process. The terminal starts the drx-HARQ-RTT-TimerUL corresponding to the HARQ process after completing a first repetition of the PUSCH.

If a drx-HARQ-RTT-TimerUL corresponding to a certain HARQ of the terminal expires, the terminal starts a drx-RetransmissionTimerUL corresponding to this HARQ process.

The terminal device receives configuration information carried in radio resource control signaling that is configured and sent by the network device. Specifically, the radio resource control signaling includes the configuration information. In addition, DRX parameter configuration information is also carried in the radio resource control signaling.

Specifically, the configuration information includes:
It should be noted that the above-mentioned radio resource control signaling may be transmitted through dedicated radio resource control signaling or common radio resource control signaling, or may be transmitted via broadcast, paging, or the like.

The DRX configuration information refers to a configuration parameter related to the DRX, such as the long DRX cycle or a timer like the drx-onDurationTimer and the drx-InactivityTimer.

SR configuration information indicates, for each uplink logical channel of the terminal device, whether it is configured with a Physical Uplink Control Channel (PUCCH) resource for transmission of a scheduling request in a case where the scheduling request or the beam failure recovery is triggered. If the uplink logical channel is configured with the PUCCH resource for transmission of the SR, the network device will configure the uplink logical channel with 0 or 1 PUCCH resource for transmission of the SR on each uplink Bandwidth Part (BWP) in each serving cell of the terminal device.

In addition, the configuration information may further include uplink logical channel configuration information.

The uplink logical channel configuration information includes at least one of the following: an uplink logical channel configuration LCP restriction configuration, and a PDCCH monitoring configuration.

Specifically, the uplink logical channel configuration LCP restriction configuration is used to define serving cells which allow the transmission of the uplink logical channel, and includes the following configuration parameters:
allowedServingCells, a list of serving cells that are allowed for transmission of the uplink logical channel; and
allowedSCS-List, a list of sub-carrier spaces that are allowed for transmission of the uplink logical channel.

Specifically, the PDCCH monitoring configuration is used to configure indication information of whether the uplink logical channel allows not skipping the PDCCH monitoring before a response to a SR from the network is received after the SR is triggered.

For example, if the uplink logical channel is a logical channel of a latency-sensitive service, the network device will configure the uplink logical channel to allow not skipping the PDCCH monitoring, and if the uplink logical channel is not the logical channel of the latency-sensitive service, the network device will configure the uplink logical channel to allow skipping the PDCCH monitoring.

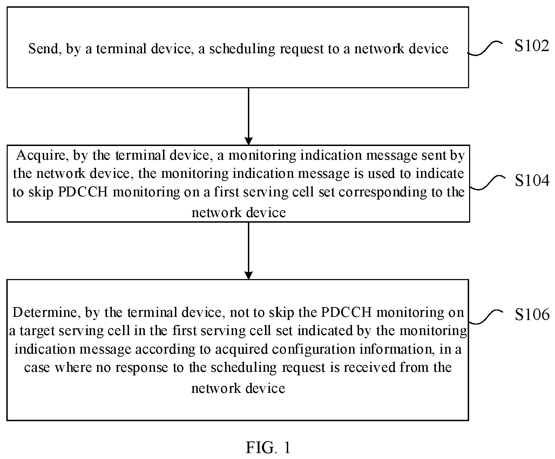

FIG. 1 is a flowchart of a Physical Downlink Control Channel (PDCCH) monitoring method according to an embodiment of the present disclosure, and as shown in FIG. 1, the method includes the following steps.

In step S102, a terminal device sends a scheduling request to a network device.

In step S104, the terminal device acquires a monitoring indication message sent by the network device, where the monitoring indication message is used to indicate to skip PDCCH monitoring on a first serving cell set corresponding to the network device.

In step S106, in a case where the terminal device does not receive a response to the scheduling request from the network device, the terminal device determines not to skip the PDCCH monitoring on a target serving cell in the first serving cell set indicated by the monitoring indication message according to acquired configuration information.

Optionally, the configuration information includes first configuration information, and the first configuration information is used to configure an uplink resource for transmitting the scheduling request in a case where a target uplink logical channel corresponding to the terminal device triggers the scheduling request or beam failure recovery.

Optionally, when the configuration information only includes the first configuration information and the terminal device does not receive the response to the scheduling request from the network device, the terminal device determines not to skip the PDCCH monitoring on the target serving cell in the first serving cell set indicated by the monitoring indication message according to the configuration information, including: the terminal device determines not to skip the PDCCH monitoring on all serving cells in the first serving cell set indicated by the monitoring indication message, according to the first configuration information.

Optionally, the configuration information further includes second configuration information, and the second configuration information is used to configure a logical channel restriction of the uplink logical channel.

Optionally, when the configuration information includes the second configuration information and no response to the scheduling request from the serving cell is received, the terminal device determines not to skip the PDCCH monitoring on the target serving cell in the first serving cell set indicated by the monitoring indication message according to the configuration information, including: the terminal device determines not to skip the PDCCH monitoring on a serving cell corresponding to the logical channel restriction in the first serving cell set indicated by the monitoring indication message, according to the second configuration information.

Optionally, the logical channel restriction includes at least one of: a list of serving cells allowed for transmission of the uplink logical channel; and a list of Sub-carrier Spacings (SCSs) allowed for transmission of the uplink logical channel.

Optionally, that the terminal device determines not to skip the PDCCH monitoring on the serving cell corresponding to the logical channel restriction in the first serving cell set indicated by the monitoring indication message according to the second configuration information includes: the terminal device determines a second serving cell set according to the list of serving cells allowed for transmission of the uplink logical channel and/or the list of Subcarrier Spacings (SCSs) allowed for transmission of the uplink logical channel, where the second serving cell set is a set of serving cells that allow transmission of the uplink logical channel; and the terminal device determines not to skip the PDCCH monitoring on the target serving cell in the first serving cell set indicated by the monitoring indication message according to the second serving cell set.

Optionally, that the terminal device determines not to skip the PDCCH monitoring on the target serving cell in the first serving cell set indicated by the monitoring indication message according to the second serving cell set includes: the terminal device determines a third serving cell set corresponding to the second serving cell set according to a cross-carrier scheduling configuration; and the terminal device determines not to skip the PDCCH monitoring on the target serving cell in the first serving cell set indicated by the monitoring indication message according to the third serving cell set.

Optionally, the method further includes: the terminal device determines to ignore the skipping of the PDCCH monitoring on the target serving cell that belongs to the first serving cell set indicated by the monitoring indication message according to the second serving cell set; and the terminal device determines to skip the PDCCH monitoring on the target serving cell that does not belong to the first serving cell set indicated by the monitoring indication message according to the second serving cell set.

Optionally, the method further includes: the configuration information further includes third configuration information, and the third configuration information is used to configure the uplink logical channel to allow ignoring the skipping of the PDCCH monitoring or to configure the uplink logical channel to not allow ignoring the skipping of the PDCCH monitoring.

Optionally, the method further includes: when the configuration information includes the third configuration information and the terminal device does not receive the response to the scheduling request from the network device, the terminal device determines not to skip the PDCCH monitoring on the target serving cell in the first serving cell set indicated by the monitoring indication message according to the configuration information, including: the terminal device determines not to skip the PDCCH monitoring on all serving cells in the first serving cell set, in a case where the third configuration information is used to configure the uplink logical channel to allow ignoring the skipping of the PDCCH monitoring; and the terminal device determines to skip the PDCCH monitoring on all the serving cells in the first serving cell set, in a case where the third configuration information is used to configure the uplink logical channel to not allow ignoring the skipping of the PDCCH monitoring.

Optionally, the third configuration information being used to configure the uplink logical channel to allow ignoring the skipping of the PDCCH monitoring or to configure the uplink logical channel to not allow ignoring the skipping of the PDCCH monitoring includes: in a case where the uplink logical channel supports a latency-sensitive service, the third configuration information is used to configure the uplink logical channel to allow ignoring the skipping of the PDCCH monitoring; and in a case where the uplink logical channel supports a non-latency-sensitive service, the third configuration information is used to configure the uplink logical channel to not allow ignoring the skipping of the PDCCH monitoring.

Optionally, the method further includes: the terminal device determines not to skip the PDCCH monitoring on the target serving cell in the first serving cell set indicated by the monitoring indication message according to a time period between receiving the monitoring indication message and sending the scheduling request.

Optionally, the method further includes: the terminal device determines not to skip the PDCCH monitoring on the target serving cell in the first serving cell set indicated by the monitoring indication message according to a time interval between receiving the monitoring indication message and sending the scheduling request.

Optionally, the terminal device may also determine whether to skip the PDCCH monitoring on the target cell in the first serving cell set according to a relationship between the time interval between receiving the monitoring indication message and sending the scheduling request and a Time Advance (TA) value or a Discontinuous Reception Hybrid Automatic Repeat Request Round-Trip Transmission delay timer duration (drx-HARQ-RTT-TimerUL, RTT for short).

Specifically, if the time interval is greater than or equal to the TA value, or greater than or equal to the discontinuous reception hybrid automatic repeat request round-trip transmission delay timer duration, the terminal device determines to skip the PDCCH monitoring on all serving cells in the first serving cell set indicated by the monitoring indication message.

Specifically, if the time interval is less than the TA value, or less than the discontinuous reception hybrid automatic repeat request round-trip transmission delay timer duration, the terminal device determines not to skip the PDCCH monitoring on the all serving cells in the first serving cell set indicated by the monitoring indication message.

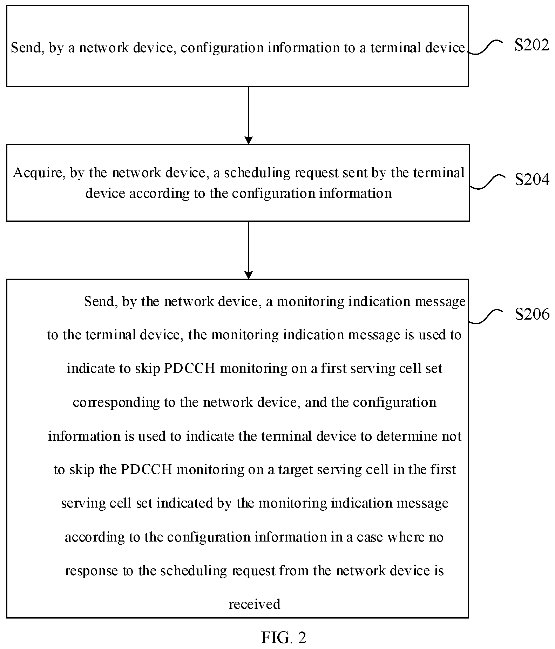

FIG. 2 is a flowchart of a Physical Downlink Control Channel (PDCCH) monitoring indication according to an embodiment of the present disclosure, and as shown in FIG. 2, the flowchart includes the following steps.

In S202, a network device sends configuration information to a terminal device.

In S204, the network device acquires a scheduling request sent by the terminal device according to the configuration information.

In S206, the network device sends a monitoring indication message to the terminal device, where the monitoring indication message is used to indicate to skip PDCCH monitoring on a first serving cell set corresponding to the network device.

The configuration information is used to indicate the terminal device to determine not to skip the PDCCH monitoring on a target serving cell in the first serving cell set indicated by the monitoring indication message according to the configuration information, in a case where the terminal device does not receive a response to the scheduling request from the network device.

Optionally, the configuration information includes first configuration information, and the first configuration information is used to configure an uplink resource that transmits the scheduling request in a case where a target uplink logical channel corresponding to the terminal device triggers the scheduling request or beam failure recovery.

Optionally, the configuration information further includes second configuration information, and the second configuration information is used to configure a logical channel restriction of the uplink logical channel.

Optionally, the logical channel restriction includes at least one of: a list of serving cells allowed for transmission of the uplink logical channel; and a list of Subcarrier Spacings (SCSs) allowed for transmission of the uplink logical channel.

Optionally, the resource scheduling configuration information further includes third configuration information, and the third configuration information is used to configure the uplink logical channel to allow ignoring the skipping of the PDCCH monitoring or to configure the uplink logical channel to not allow ignoring the skipping of the PDCCH monitoring.

Optionally, in a case where the uplink logical channel supports a latency-sensitive service, the third configuration information is used to configure the uplink logical channel to allow ignoring the skipping of the PDCCH monitoring; and in a case where the uplink logical channel supports a non-latency-sensitive service, the third configuration information is used to configure the uplink logical channel to not allow ignoring the skipping of the PDCCH monitoring.

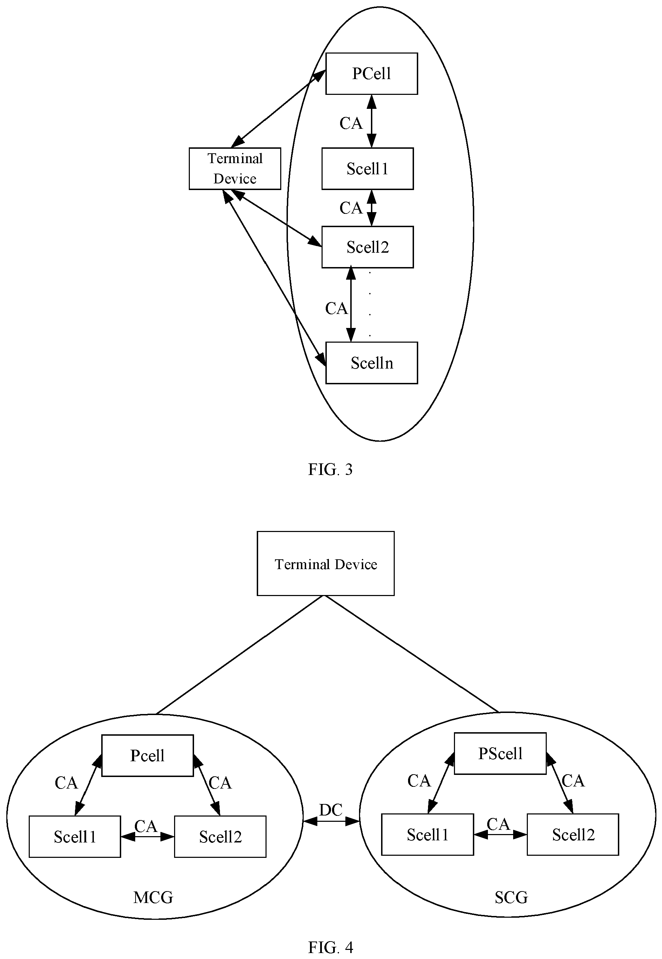

FIG. 3 is a schematic diagram of a first serving cell set based on a scenario of supporting carrier aggregation. As shown in FIG. 3, the first serving cell set may include a Primary Cell (Pcell) and one or more Secondary Cells (SCells) in the scenario of supporting the carrier aggregation.

Further, in a scenario of supporting dual connectivity, FIG. 4 is a schematic diagram of a first serving cell set based on the scenario of supporting dual connectivity. As shown in FIG. 4, the first serving cell set may include a cell in a Master Cell Group (MCG), that is, a PCell or a SCell, and a cell in a Secondary Cell Group (SCG), that is, a Primary Secondary Cell (PSCell) or a SCell.

Specifically, for clear understanding of the technical solutions described above, the following scenarios are also provided in the embodiments of the present disclosure to facilitate understanding.

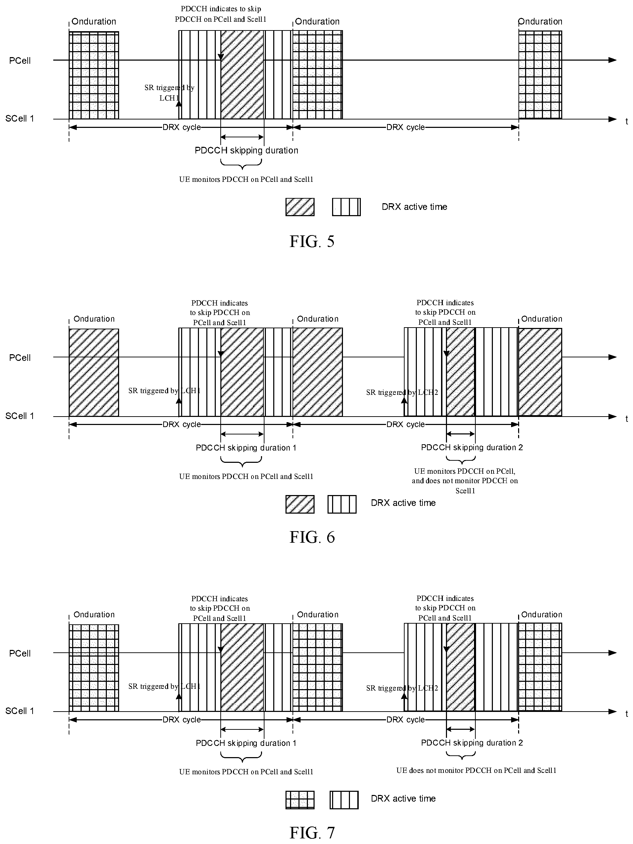

It should be noted that the following scenarios can be applied in the network structure in FIG. 3 or FIG. 4. For the convenience of description, the network structure of carrier aggregation in FIG. 3 is described in this specification. Note that, the solutions in the dual connectivity scenario are also within the protection scope of the present disclosure, and combination can be performed based on contents described with reference to FIG. 4 and FIG. 5, details of which are not described here.

It should be noted that the carrier aggregation scenario and the dual connectivity scenario are only illustrated as examples.

It should be noted that, in the following scenarios, only a serving cell set with the PCell and the SCell1 is illustrated. However, in practice, it can be appreciated that the following scenarios can be applied to any number of serving cells, such as a scenario in which there are only a plurality of SCells as serving cells, and a scenario in which there are the PSCell and a plurality of SCells as the serving cells, which thus will not be described in detail here. In summary, any scenario will fall within the protection scope of the following scenarios as long as it can encompass the idea of the present disclosure.

### First Scenario:

FIG. 5 is a schematic diagram of PDCCH monitoring in a DRX cycle based on a first scenario.

Specifically, an interaction process based on the scenario in FIG. 5 is as follows.

In step S1, a network device determines configuration content in configuration information, and the configuration content includes DRX configuration information and SR configuration information. The SR configuration information is used to configure a PUCCH resource for transmitting a SR when a logical channel LC1 triggers the SR or a terminal triggers a BFR. Meanwhile, for the LC1 or the BFR, the network configures one PUCCH resource for transmitting the SR on each uplink bandwidth part of each serving cell.

In step S2, the network device sends the configuration information to the terminal device.

In step S3, the terminal device triggers the UE to send the SR to a Scell1 on a PUCCH of the Scell1 according the acquired configuration information which configures the PUCCH resource for transmitting the SR when the logical channel LC1 triggers the SR or the terminal device triggers the BFR, as shown in FIG. 5.

In step S4, the network sends monitoring indication information to the terminal device through the SCell1. The monitoring indication information is used to indicate to skip PDCCH monitoring on a PCell and the SCell1 in a serving cell set with the PCell and the SCell1. In addition, optionally, as shown in FIG. 5, the monitoring indication information can also indicate a duration for PDCCH skipping.

In step S5, the terminal device has not yet received a response to the scheduling request from the network, and thus the terminal device determines not to skip the PDCCH monitoring on the PCell and the SCell1 according to the configuration content of the network device, that is, according to the DRX configuration information and the SR configuration information. Optionally, as shown in FIG. 5, if the monitoring indication information indicates the duration for the PDCCH skipping, the terminal device determines not to skip the PDCCH monitoring on the PCell and the SCell1 during the duration for the PDCCH skipping.

In step S6, the terminal device receives a response to the scheduling request from the SCell1, and the terminal device skips the PDCCH monitoring on the PCell and the SCell1 in the serving cell set with the PCell and the SCell1 according to the monitoring indication information.

It should be noted that in the step S6, the terminal device may also maintain not skipping the PDCCH monitoring on the PCell and the SCell1 during the duration for the PDCCH skipping.

### Second Scenario:

Steps S1-S4 in the second scenario are the same as the steps S1-S4 in the first scenario, which are not repeated here. Meanwhile, the schematic diagram of the PDCCH monitoring in FIG. 5 is also applicable to the second scenario. Specifically, an interaction process in the second scenario further includes:
In step S5, the terminal device determines whether a time interval between a time of sending the SR in the step S3 and a time of receiving the monitoring indication information in the step S4 is less than a TA value or a RTT timer of the terminal device.
In step S6, if the time interval is greater than or equal to the TA value or greater than or equal to the RTT timer, the terminal device determines to skip the PDCCH monitoring on the PCell and the SCell1.
In step S7, if the time interval is less than the TA value or less than the RTT timer, and the terminal device has not yet received the response to the scheduling request from the network at this time, the terminal device determines not to skip the PDCCH monitoring on the PCell and the SCell1 according to the configuration content of the network device, that is, the DRX configuration information and the SR configuration information. Optionally, as shown in FIG. 5, if the monitoring indication information indicates the duration for the PDCCH skipping, the terminal device determines not to skip the PDCCH monitoring on the PCell and the SCell1 during the duration for the PDCCH skipping.
In step S8, the terminal device receives the response to the scheduling request from the SCell1, but the terminal device maintains not skipping the PDCCH monitoring on the PCell and the SCell1 during the duration for the PDCCH skipping.

It should be noted that in the step S8, the terminal device may also skip the PDCCH monitoring on the PCell and the SCell1 in the serving cell set including the PCell and the SCell1 according to the monitoring indication information.

If both the TA value and the RTT timer are configured, they can be used according to the maximum value of the TA value and the RTT timer or the minimum value of the TA value and the RTT timer according to actual needs.

### Third scenario:

FIG. 6 is a schematic diagram of PDCCH monitoring in a DRX cycle based on a third scenario. Specifically, the scenario based on FIG. 6 may include the following interaction process.

In step S1, a network device determines configuration content in configuration information, and the configuration content includes DRX configuration information, SR configuration information and a LCP restriction configuration of LC2. The SR configuration information is used to configure a PUCCH resource for logical channels LC1 and LC2 to transmit a SR when a terminal device triggers the SR. Meanwhile, one PUCCH resource for transmitting the SR is configured on each uplink bandwidth part of each serving cell of LC1 and LC2. The uplink logical channel configuration LCP restriction configuration of LC2 includes: a serving cell PCell that is allowed for transmission of this uplink logical channel.

In step S2, the network device sends the configuration information to the terminal device.

In step S3, the terminal device triggers the UE to send the SR to the network on a PUCCH of a Scell1 through LC1 according the acquired configuration information which configures the PUCCH resource for LC1 to transmit the SR when the terminal device triggers the SR, as shown in FIG. 6.

In step S4, the network sends monitoring indication information to the terminal device on the SCell1. The monitoring indication information is used to indicate to skip PDCCH monitoring on a PCell and the SCell1 in a serving cell set including the PCell and the SCell1. In addition, optionally, as shown in FIG. 6, the monitoring indication information can also indicate a duration for PDCCH skipping.

In step S5, the terminal device determines not to skip the PDCCH monitoring on the PCell and the SCell1 according to the configuration content of the network device, that is, the DRX configuration information and the SR configuration information. Optionally, as shown in FIG. 6, if the monitoring indication information indicates the duration for the PDCCH skipping, the terminal device determines not to skip the PDCCH monitoring on the PCell and the SCell1 during the duration for the PDCCH skipping.

In step S6, the terminal device triggers the UE to send the SR to the Scell1 on the PUCCH of the Scell1 through LC2 according the acquired configuration information which configures the PUCCH resource for LC2 to transmit the SR when the terminal device triggers the SR, as shown in FIG. 6.

In step S7, the SCell1 sends monitoring indication information to the terminal device. The monitoring indication information is used to indicate to skip PDCCH monitoring on a PCell and the SCell1 in a serving cell set including the PCell and the SCell1. In addition, optionally, as shown in FIG. 6, the monitoring indication information can also indicate a duration for PDCCH skipping.

In step S8, the terminal device determines not to skip the PDCCH monitoring on the PCell and to skip the PDCCH monitoring on the SCell1 according to the configuration content of the network device, that is, the DRX configuration information, the SR configuration information and the uplink logical channel configuration LCP restriction configuration of LC2. Optionally, as shown in FIG. 6, if the monitoring indication information indicates the duration for the PDCCH skipping, the terminal device determines not to skip the PDCCH monitoring on the PCell during the duration for the PDCCH skipping and to skip the PDCCH monitoring on the SCell1 during the duration for the PDCCH skipping.

In step S9, the terminal device receives the response to the scheduling request on each of LC1 and LC2 sent by the network on the SCell1; for LC1, the terminal device maintains not skipping the PDCCH monitoring on the PCell and the SCell1 during the duration for the PDCCH skipping, and for LC2, the terminal device skips the PDCCH monitoring on the PCell and the SCell1 according to the monitoring indication information of the SCell1.

It should be noted that in the step S9, for LC1, the terminal device may also skip the PDCCH monitoring on the PCell and the SCell1 in the serving cell set including the PCell and the SCell1 according to the monitoring indication information, and for LC2, the terminal device may also maintain not skipping the PDCCH monitoring on the PCell but skip the PDCCH monitoring on the SCell1.

### Fourth Scenario:

Steps S2-S7 in the fourth scenario are the same as the steps S2-S7 in the third scenario, which are not repeated here. Meanwhile, the schematic diagram of the PDCCH monitoring in FIG. 6 is also applicable to the fourth scenario. An interaction process in the fourth scenario further includes the following.

A difference between the step S2 in the fourth scenario and the step S2 in the third scenario is that the uplink logical channel configuration LCP restriction configuration of LC2 includes a list of subcarrier spacings that are allowed for transmission of LC2 and the subcarrier spacings are 15KHZ and 60KHZ.

In step S8, since a subcarrier spacing of the PCell is 15KHZ, and a subcarrier spacing of the Scell1 is 30KHZ, the terminal device determines not to skip the PDCCH monitoring on the PCell but skip the PDCCH monitoring on the SCell1 according to the configuration content of the network device, that is, the DRX configuration information, the SR configuration information and the uplink logical channel configuration LCP restriction configuration of LC2.

In step S9, the terminal device determines, according to a cross-carrier scheduling configuration, that the PCell can send a PDCCH indicating uplink scheduling of the PCell. Therefore, the terminal device determines not to skip the PDCCH monitoring on the PCell, but skip the PDCCH monitoring on the SCell1. Optionally, as shown in FIG. 6, if the monitoring indication information indicates the duration for the PDCCH skipping, the terminal device determines not to skip the PDCCH monitoring on the PCell during the duration for the PDCCH skipping but skip the PDCCH monitoring on the SCell1 during the duration for the PDCCH skipping.

In step S10, the terminal device receives the response to the scheduling request on each of LC1 and LC2 from the SCell1; for LC1, the terminal device maintains not skipping the PDCCH monitoring on the PCell and the SCell1 during the duration for the PDCCH skipping, and for LC2, the terminal device skips the PDCCH monitoring on the PCell and the SCell1 according to the monitoring indication information of the SCell1.

It should be noted that in the step S10, for LC1, the terminal device may also skip the PDCCH monitoring on the PCell and the SCell1 in the serving cell set including the PCell and the SCell1 according to the monitoring indication information, and for LC2, the terminal device may also maintain not skipping the PDCCH monitoring on the PCell but skip the PDCCH monitoring on the SCell1.

It should be noted that, in the third scenario and the fourth scenario, if the uplink logical channel configuration LCP restriction configuration includes both the list of subcarrier spacings that are allowed for transmission of LC2 and the list of serving cells that are allowed for transmission of the uplink logical channel, the terminal device needs to determine a serving cell that satisfies these two lists.

It should be pointed out that a value range of the list of subcarrier spacings that allow transmission of LC2 in the present disclosure can use a value range of a subcarrier spacings of NR, such as 15KHZ, 30KHZ, 60KHZ, 120KHZ, 240KHZ, etc., which will not be repeated when involved in the following embodiments.

### Fifth scenario:

FIG. 7 is a schematic diagram of PDCCH monitoring in a DRX cycle based on a fifth scenario. Specifically, the scenario based on FIG. 7 may include the following interaction process.

In step S1, a network device determines configuration content in configuration information, and the configuration content includes DRX configuration information, SR configuration information and a PDCCH monitoring configuration of LC2. The SR configuration information is used to configure a PUCCH resource for logical channels LC1 and LC2 to transmit a SR when a terminal device triggers the SR. Meanwhile, one PUCCH resource for transmitting the SR is configured on each uplink bandwidth part of each serving cell for LC1 and LC2. The PDCCH monitoring configuration of LC2 includes indication information that configures LC2 to allow skipping PDCCH monitoring.

In step S2, the network device sends the configuration information to the terminal device.

In step S3, the terminal device triggers the UE to send the SR to a Scell1 on a PUCCH of the Scell1 through LC1 according the acquired configuration information which configures the PUCCH resource for LC1 to transmit the SR when the terminal device triggers the SR, as shown in FIG. 7.

In step S4, the network device sends monitoring indication information to the terminal device. The monitoring indication information is used to indicate to skip PDCCH monitoring on a PCell and the SCell1 in a serving cell set including the PCell and the SCell1. In addition, optionally, as shown in FIG. 7, the monitoring indication information can also indicate a duration for PDCCH skipping.

In step S5, the terminal device determines not to skip the PDCCH monitoring on the PCell and the SCell1 according to the configuration content of the network device, that is, the DRX configuration information and the SR configuration information. Optionally, as shown in FIG. 7, if the monitoring indication information indicates the duration for the PDCCH skipping, the terminal device determines not to skip the PDCCH monitoring on the PCell and the SCell1 during the duration for the PDCCH skipping.

In step S6, the terminal device receives the response to the scheduling request on LC1 from the network device; for LC1, the terminal device maintains not skipping the PDCCH monitoring on the PCell and the SCell1 during the duration for the PDCCH skipping.

In step S7, the terminal device triggers the UE to send the SR to the network device on the PUCCH of the Scell1 through LC2 according the acquired configuration information which configures the PUCCH resource for LC2 to transmit the SR when the terminal device triggers the SR, as shown in FIG. 7.

In step S8, the network device sends monitoring indication information to the terminal device. The monitoring indication information is used to indicate to skip PDCCH monitoring on a PCell and the SCell1 in a serving cell set including the PCell and the SCell1. In addition, optionally, as shown in FIG. 7, the monitoring indication information can also indicate a duration for PDCCH skipping.

In step S9, the terminal device determines to skip the PDCCH monitoring on the PCell and the SCell1 according to the configuration content of the network device, that is, the DRX configuration information, the SR configuration information and the indication information that configures LC2 to allow skipping the PDCCH monitoring. Optionally, as shown in FIG. 7, if the monitoring indication information indicates the duration for the PDCCH skipping, the terminal device determines to skip the PDCCH monitoring on the PCell and the SCell1 during the duration for the PDCCH skipping.

It should be noted that in the step S10, for LC1, the terminal device may also skip the PDCCH monitoring on the PCell and the SCell1 in the serving cell set including the PCell and the SCell1 according to the monitoring indication information.

It should be noted that, if the PDCCH monitoring configuration of LC2 includes the indication information that configures LC2 to allow skipping the PDCCH monitoring in the step S1, the terminal device determines to skip the PDCCH monitoring on the PCell and the Scell1 in the step S8.

### Sixth Scenario:

The sixth scenario can include the following interaction processes.

In step S1, a network device determines configuration content in configuration information, and the configuration content includes DRX configuration information, SR configuration information and an uplink logical channel configuration of LC2. The uplink logical channel configuration of LC2 includes: a PDCCH monitoring configuration of LC2 and a LCP restriction configuration of LC2. The SR configuration information is used to configure a PUCCH resource for logical channels LC1 and LC2 to transmit a SR when a terminal device triggers the SR. Meanwhile, one PUCCH resource for transmitting the SR is configured on each uplink bandwidth part of each serving cell for LC1 and LC2. A PDCCH monitoring configuration of LC1 includes indication information that configures the LC1 to allow not skipping PDCCH monitoring, the PDCCH monitoring configuration of LC2 includes indication information that configures LC2 to allow not skipping the PDCCH monitoring, and the LCP restriction configuration of LC2 includes: a serving cell PCell that is allowed for transmission of the uplink logical channel; and a list of subcarrier spacings that are allowed for transmission of LC2, including the subcarrier spacings of15KHZ and 60KHZ.

In step S2, the network device sends the configuration information to the terminal device.

In step S3, the terminal device triggers the UE to send the SR to the network device on a PUCCH of a Scell1 through LC1 according the acquired configuration information which configures the PUCCH resource for LC1 to transmit the SR when the terminal device triggers the SR.

In step S4, the network device sends monitoring indication information to the terminal device. The monitoring indication information is used to indicate to skip PDCCH monitoring on a PCell and the SCell1 in a serving cell set including the PCell and the SCell1, a subcarrier spacing of the PCell is 30KHZ, and a subcarrier spacing of the Scell1 is 15KHZ. In addition, optionally, as shown in FIG. 7, the monitoring indication information can also indicate a duration for PDCCH skipping.

In step S5, the terminal device determines not to skip the PDCCH monitoring on the PCell and the SCell1 according to the configuration content of the network device, that is, the DRX configuration information and the SR configuration information. Optionally, if the monitoring indication information indicates the duration for the PDCCH skipping, the terminal device determines not to skip the PDCCH monitoring on the PCell and the SCell1 during the duration for the PDCCH skipping.

In step S6, the terminal device receives the response to the scheduling request on LC1 from the network device; for LC1, the terminal device maintains not skipping the PDCCH monitoring on the PCell and the SCell1 during the duration for the PDCCH skipping.

In step S7, the terminal device triggers the UE to send the SR to the network device on the PUCCH of the Scell1 through LC2 according the acquired configuration information which configures the PUCCH resource for LC2 to transmit the SR when the terminal device triggers the SR.

In step S8, the network sends monitoring indication information to the terminal device. The monitoring indication information is used to indicate to skip PDCCH monitoring on a PCell and the SCell1 in a serving cell set including the PCell and the SCell1. In addition, optionally, the monitoring indication information can also indicate a duration for PDCCH skipping.

In step S9, the terminal device determines a PDCCH monitoring situation on the PCell and the SCell1 according to the configuration content of the network device, that is, the DRX configuration information, the SR configuration information and the uplink logical channel configuration of LC2. Specifically, since the PDCCH monitoring configuration of LC2 includes the indication information that configures LC2 to allow not skipping the PDCCH monitoring, and thus the indication information of not skipping the PDCCH monitoring on the PCell and the SCell1. However, since the LCP restriction configuration of LC2 includes the serving cell PCell that is allowed for transmission of the uplink logical channel, and the list of subcarrier spacings that are allowed for transmission of LC2 with the subcarrier spacings being 15KHZ and 60KHZ, it is finally determined to skip the PDCCH monitoring on both the PCell and the SCell1.

It should be noted that in the step S10, for LC1, the terminal device may also skip the PDCCH monitoring on the PCell and the SCell1 in the serving cell set including the PCell and the SCell1 according to the monitoring indication information.

It should be noted that, if the PDCCH monitoring configuration of LC2 includes the indication information that configures LC2 to allow skipping the PDCCH monitoring in the step S1, the terminal device determines to skip the PDCCH monitoring on the PCell and the Scell1 in the step S8.

### Seventh Scenario:

Steps S2-S8 in the seventh scenario are the same as the steps S2-S8 in the sixth scenario, which are not repeated here. The seventh scenario further includes the following interaction process.

Step S1 in the seventh scenario differs from the step S1 in the sixth scenario in that the uplink logical channel configuration LCP restriction configuration of LC2 includes a list of subcarrier spacings that are allowed for transmission of LC2 with the subcarrier spacings being 30KHZ, and 60KHZ.

In step S9, the terminal device determines a PDCCH monitoring situation on the PCell and the SCell1 according to the configuration content of the network device, that is, the DRX configuration information, the SR configuration information and the uplink logical channel configuration of LC2. Specifically, since the PDCCH monitoring configuration of LC2 includes the indication information that configures LC2 to allow not skipping the PDCCH monitoring, and thus the indication information of not skipping the PDCCH monitoring on the PCell and the SCell1. However, since the LCP restriction configuration of LC2 includes the serving cell PCell that is allowed for transmission of the uplink logical channel, and the list of subcarrier spacings that are allowed for transmission of LC2 with the subcarrier spacings being 30KHZ and60KHZ, it is finally determined not to skip the PDCCH monitoring on the PCell, and to skip the PDCCH monitoring on the SCell1.

In step S10, the terminal device receives a response to the scheduling request on LC2 from the network device; for LC2, the terminal device skips the PDCCH monitoring during the duration for the PDCCH skipping on the PCell and the SCell1 according to the monitoring indication information.

It should be noted that in the step S10, for LC1, the terminal device may also skip the PDCCH monitoring on the PCell and the SCell1 in the serving cell set including the PCell and the SCell1 according to the monitoring indication information, and for LC2, the terminal device may also maintain not skipping the PDCCH monitoring on the PCell but skip the PDCCH monitoring on the SCell1.

It should be noted that, if the PDCCH monitoring configuration of LC2 includes the indication information that configures LC2 to allow skipping the PDCCH monitoring in the step S1, the terminal device determines to skip the PDCCH monitoring on the PCell and the Scell1 in the step S9.

It should be noted that in the sixth scenario and the seventh scenario, if the uplink logical channel configuration includes both the PDCCH monitoring configuration and the LCP restriction configuration, the determination can also be performed according to one of the configurations. For example, only the PDCCH monitoring configuration is considered, and the LCP restriction configuration is not considered. It is also possible to consider one of the configurations preferentially, according to a configuration priority of the PDCCH monitoring configuration and the LCP restriction configuration. For example, a serving cell set is first determined from the LCP restriction configuration, and then a target serving cell is selected from the serving cell set according to the PDCCH monitoring configuration. The PDCCH monitoring configuration and the LCP restriction configuration can also be considered at the same time as described in the sixth scenario and the seventh scenario.

It should be noted that in the sixth scenario and the seventh scenario, if there are a plurality of LCP restriction configurations, it may also consider only one of restriction manners, such as the list of subcarrier spacings or the list of serving cells that are allowed for transmission of the uplink logical channel. A serving cell that can satisfy the plurality of LCP restriction configurations can be comprehensively considered, which is not described here in details in view of so many examples.

It should be noted that, in the third scenario to the seventh scenario, before the terminal device determines the skipping of the PDCCH monitoring on the serving cell according to the configuration information, it can first determine whether a time period between a time of sending the SR and a time of receiving the monitoring indication information is less than a TA value or a RTT timer of the terminal device.

It should be noted that, in the sixth scenario and the seventh scenario, for example, as for the principle that the terminal determines not to skip the PDCCH monitoring on the target serving cell according to various configuration information of the uplink logical channel, one of the options is that it is configured by the network device through radio resource control signaling, or it may be pre-negotiated with the network device, or it may be determined by the terminal device itself.

In summary, the above scenarios are only schematically illustrated. In fact, the protection scope of the present disclosure can be based on any combination of the above scenarios in any way without conflict. Therefore, any technical solutions included in the above scenarios and the combination of the above scenarios are within the protection scope of the present disclosure.

Through the description of the above implementations, those skilled in the art can clearly understand that the foregoing embodiments of the methods can be implemented by means of software and a necessary general hardware platform, and of course, can also be implemented through hardware, but in many cases, the former is the better implementation. Based on such understanding, the technical solution of the present disclosure, essentially or the part that contributes to the prior art, may be embodied in the form of a software product, where the software product of the computer is stored in a storage medium (such as a ROM/RAM, a disk, or an optical disc), and includes instructions for causing a terminal device (which may be a cell phone, a computer, a server, a network device, or the like) to perform the methods described in various embodiments of the present disclosure.

The embodiments also provide a Physical Downlink Control Channel (PDCCH) monitoring apparatus, and the apparatus is configured to implement the above embodiments and preferred implementations, and what has been described will not be repeated. As used below, the term "module" may be a combination of the software and/or hardware which can realize a predetermined function. The apparatus as described in the following embodiments is preferably implemented by software, but the implementations through hardware or a combination of software and hardware are also possible and contemplated.

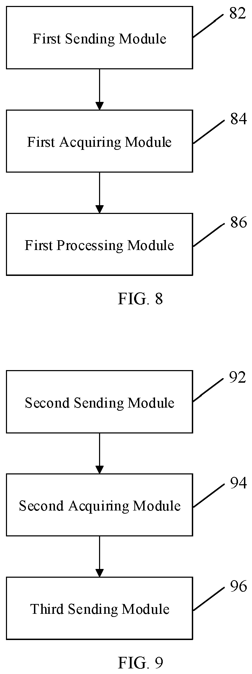

FIG. 8 is a structural block diagram of a Physical Downlink Control Channel (PDCCH) monitoring apparatus according to an embodiment of the present disclosure, and as shown in FIG. 8, the apparatus includes a first sending module 82, a first acquiring module 84, and a first processing module 86.

The first sending module 82 is configured to send a scheduling request to a network device.

The first acquiring module 84 is configured to acquire a monitoring indication message sent by the network device, where the monitoring indication message is used to indicate to skip PDCCH monitoring on a first serving cell set corresponding to the network device.

The first processing module 86 is configured to determine not to skip the PDCCH monitoring on a target serving cell in the first serving cell set indicated by the monitoring indication message according to the acquired configuration information in a case where a response to the scheduling request from the network device is not received.

Optionally, the configuration information includes first configuration information, and the first configuration information is used to configure an uplink resource for transmitting the scheduling request in a case where a target uplink logical channel corresponding to the terminal device triggers the scheduling request or beam failure recovery.

Optionally, when the configuration information includes only the first configuration information and the terminal device does not receive the response to the scheduling request from the network device, it includes: determining not to skip the PDCCH monitoring on all serving cells in the first serving cell set indicated by the monitoring indication message according to the first configuration information.

Optionally, the configuration information further includes second configuration information, and the second configuration information is used to configure a logical channel restriction of the uplink logical channel.

Optionally, when the configuration information includes the second configuration information and no response to the scheduling request from the serving cell is received, it includes that the terminal device determines not to skip the PDCCH monitoring on a serving cell corresponding to the logical channel restriction in the first serving cell set indicated by the monitoring indication message according to the second configuration information.

Optionally, the logical channel restriction includes at least one of: a list of serving cells allowed for transmission of the uplink logical channel; and a list of Subcarrier Spacings (SCSs) allowed for transmission of the uplink logical channel.

Optionally, a second serving cell set is determined according to the list of serving cells that are allowed for transmission of the uplink logical channel and/or the list of Subcarrier Spacings (SCSs) that are allowed for transmission of the uplink logical channel, wherein the second serving cell set is a set of serving cells that allow transmission of the uplink logical channel; and the terminal device determines not to skip the PDCCH monitoring on the target serving cell in the first serving cell set indicated by the monitoring indication message according to the second serving cell set.

Optionally, a third serving cell set corresponding to the second serving cell set is determined according to a cross-carrier scheduling configuration; and the terminal device determines not to skip the PDCCH monitoring on the target serving cell in the first serving cell set indicated by the monitoring indication message according to the third serving cell set.

Optionally, it is determined to ignore skipping of the PDCCH monitoring on the target serving cell belonging to the first serving cell set indicated by the monitoring indication message according to the second serving cell set; and the terminal device determines to skip the PDCCH monitoring on the target serving cell not belonging to the first serving cell set indicated by the monitoring indication message according to the second serving cell set.

Optionally, the configuration information further includes third configuration information, and the third configuration information is used to configure the uplink logical channel to allow ignoring the skipping of the PDCCH monitoring or to configure the uplink logical channel to not allow ignoring the skipping of the PDCCH monitoring.

Optionally, when the configuration information includes the third configuration information and no response to the scheduling request from the network device is received by the terminal device, it includes: in a case where the third configuration information is used to configure the uplink logical channel to allow ignoring the skipping of the PDCCH monitoring, it is determined not to skip the PDCCH monitoring on all serving cells in the first serving cell set; and in a case where the third configuration information is used to configure the uplink logical channel to not allow ignoring the skipping of the PDCCH monitoring, the terminal device determines to skip the PDCCH monitoring on the all serving cells in the first serving cell set.

Optionally, the third configuration information being used to configure the uplink logical channel to allow ignoring the skipping of the PDCCH monitoring or to configure the uplink logical channel to not allow ignoring the skipping of the PDCCH monitoring includes: in a case where the uplink logical channel supports a latency-sensitive service, the third configuration information is used to configure the uplink logical channel to allow ignoring the skipping of the PDCCH monitoring; and in a case where the uplink logical channel supports a non-latency-sensitive service, the third configuration information is used to configure the uplink logical channel to not allow ignoring the skipping of the PDCCH monitoring.

Optionally, it is determined not to skip the PDCCH monitoring on the target serving cell in the first serving cell set indicated by the monitoring indication message according to a time period between receiving the monitoring indication message and sending the scheduling request.

Optionally, it is determined not to skip the PDCCH monitoring on the target serving cell in the first serving cell set indicated by the monitoring indication message according to a time interval between receiving the monitoring indication message and sending the scheduling request.

Optionally, it may also determine whether to skip the PDCCH monitoring on the target cell in the first serving cell set according to a relationship between the time interval between receiving the monitoring indication message and sending the scheduling request and a Time Advance (TA) value or a Discontinuous Reception Hybrid Automatic Repeat Request Round-Trip Transmission delay timer duration (drx-HARQ-RTT-TimerUL, RTT for short).

Specifically, if the time interval is greater than or equal to the TA value, or greater than or equal to the discontinuous reception hybrid automatic repeat request round-trip transmission delay timer duration, the terminal device determines to skip the PDCCH monitoring on all serving cells in the first serving cell set indicated by the monitoring indication message.

Specifically, if the time interval is less than the TA value, or less than the discontinuous reception hybrid automatic repeat request round-trip transmission delay timer duration, the terminal device determines not to skip the PDCCH monitoring on the all serving cells in the first serving cell set indicated by the monitoring indication message.

It should be noted that the above modules can be implemented by software or hardware, and for the latter, implementation may be performed in but not limited to the following manner: the above modules are all located in the same processor; or, the above modules can be located in different processors in any combination.

The embodiments also provide a Physical Downlink Control Channel (PDCCH) monitoring indication apparatus, and the apparatus is configured to implement the above embodiments and preferred implementations, and what has been described will not be repeated. As used below, the term "module" may be a combination of the software and/or hardware which can realize a predetermined function. The apparatus as described in the following embodiments are preferably implemented by software, but the implementations by hardware or a combination of software and hardware are also possible and contemplated.

FIG. 9 is a structural block diagram of a Physical Downlink Control Channel (PDCCH) monitoring indication apparatus according to an embodiment of the present disclosure, and as shown in FIG. 9, the apparatus includes a second sending module 92, a second acquiring module 94 and a third sending module 96.

The second sending module 92 is configured to send configuration information to a terminal device.

The second acquiring module 94 is configured to acquire a scheduling request sent by the terminal device according to the configuration information.

The third sending module 96 is configured to send a monitoring indication message to the terminal device, wherein the monitoring indication message is used to indicate to skip PDCCH monitoring on a first serving cell set corresponding to the network device.

The configuration information is used to indicate the terminal device to determine not to skip the PDCCH monitoring on a target serving cell in the first serving cell set indicated by the monitoring indication message according to the configuration information, in a case where the terminal does not receive a response to the scheduling request from the network device.

Optionally, the configuration information includes first configuration information, and the first configuration information is used to configure an uplink resource for transmitting the scheduling request in a case where a target uplink logical channel corresponding to the terminal device triggers the scheduling request or beam failure recovery.

Optionally, the configuration information further includes second configuration information, and the second configuration information is used to configure a logical channel restriction of the uplink logical channel.

Optionally, the logical channel restriction includes at least one of: a list of serving cells allowed for transmission of the uplink logical channel; and a list of Subcarrier Spacings (SCSs) allowed for transmission of the uplink logical channel.

Optionally, the resource scheduling configuration information further includes third configuration information, and the third configuration information is used to configure the uplink logical channel to allow ignoring the skipping of the PDCCH monitoring or to configure the uplink logical channel to not allow ignoring the skipping of the PDCCH monitoring.

Optionally, in a case where the uplink logical channel supports a latency-sensitive service, the third configuration information is used to configure the uplink logical channel to allow ignoring the skipping of the PDCCH monitoring; and in a case where the uplink logical channel supports a non-latency-sensitive service, the third configuration information is used to configure the uplink logical channel to not allow ignoring the skipping of the PDCCH monitoring.

It should be noted that the above modules can be implemented by software or hardware, and for the latter, implementation may be performed in but not limited to the following manner: the above modules are all located in the same processor; or, the above modules can be located in different processors in any combination.

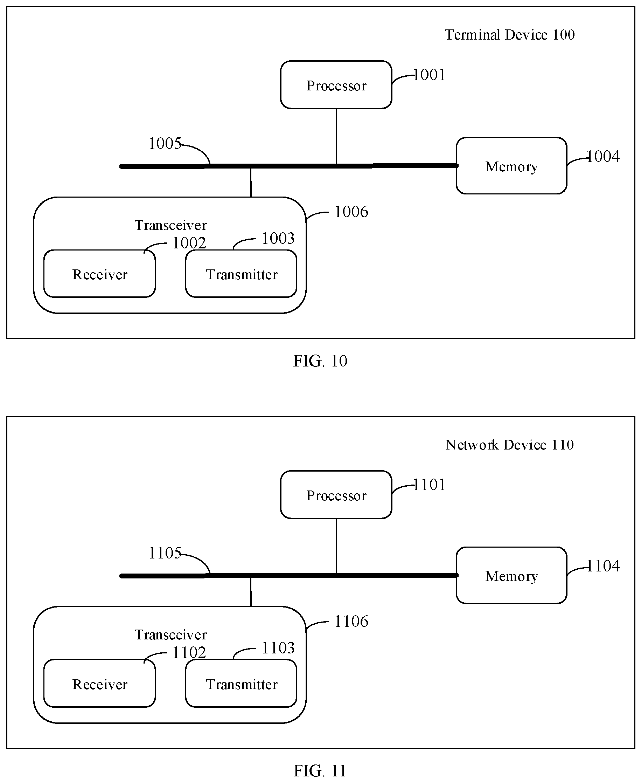

FIG. 10 is a schematic structural diagram of a terminal device according to an embodiment of the present disclosure. As shown in FIG. 10, the terminal device may be configured to perform the PDCCH monitoring method on the terminal device side described above. Specifically, the terminal device 100 may include: a processor 1001, a receiver 1002, a transmitter 1003, a memory 1004 and a bus 1005.

The processor 1001 includes one or more processing cores, and the processor 1001 performs various functional applications and information processing by running software programs and modules.

The receiver 1002 and the transmitter 1003 may be implemented as a transceiver 1006, which may be a communication chip.

The memory 1004 is connected to the processor 1001 through the bus 1005.

The memory 1004 can be configured to store a computer program, and the processor 1004 is configured to execute the computer program to implement various steps performed by the terminal device in the above method embodiments.

In addition, the memory 1004 can be implemented by any type of volatile or non-volatile storage devices or a combination thereof. The volatile or non-volatile storage device includes but is not limited to: a Random-Access Memory (RAM), a Read-Only Memory (ROM), an Erasable Programmable Read-Only Memory (EPROM), an Electrically Erasable Programmable Read-Only Memory (EEPROM), a flash memory or another solid state storage technology, a Compact Disc Read-Only Memory (CD-ROM), a Digital Video Disc (DVD) or other optical storage, a cassette, a magnetic tape, a magnetic disk storage or other magnetic storage devices.

The transceiver 1006 is configured to: send a scheduling request to a network device; and acquire a monitoring indication message sent by the network device.

The monitoring indication message is used to indicate to skip PDCCH monitoring on a first serving cell set corresponding to the network device
The processor 1001 is configured to: determine not to skip the PDCCH monitoring on a target serving cell in the first serving cell set indicated by the monitoring indication message according to the acquired configuration information, in a case where a response to the scheduling request is not received from the network device.

FIG. 11 is a schematic structural diagram of a network device according to an embodiment of the present disclosure. As shown in FIG. 11, the network device may be configured to perform the PDCCH monitoring method on the network device side described above. Specifically, the network device 110 may include: a processor 1101, a receiver 1102, a transmitter 1103, a memory 1104 and a bus 1105.

The processor 1101 includes one or more processing cores, and the processor 1101 performs various functional applications and information processing by running software programs and modules.

The receiver 1102 and the transmitter 1103 may be implemented as a transceiver 1106, which may be a communication chip.

The memory 1104 is connected to the processor 1101 through the bus 1105.

The memory 1104 can be configured to store a computer program, and the processor 1104 is configured to execute the computer program to implement various steps performed by the terminal device in the above method embodiments.

In addition, the memory 1104 can be implemented by any type of volatile or non-volatile storage devices or a combination thereof. The volatile or non-volatile storage device includes but is not limited to: a Random-Access Memory (RAM), a Read-Only Memory (ROM), an Erasable Programmable Read-Only Memory (EPROM), an Electrically Erasable Programmable Read-Only Memory (EEPROM), a flash memory or another solid state storage technology, a Compact Disc Read-Only Memory (CD-ROM), a Digital Video Disc (DVD) or other optical storage, a cassette, a magnetic tape, a magnetic disk storage or other magnetic storage devices.

The transceiver 1106 is configured to: send configuration information to a terminal device; acquire a scheduling request sent by the terminal device according to the configuration information; and send a monitoring indication message to the terminal device, wherein the monitoring indication message is used to indicate to skip PDCCH monitoring on a first serving cell set corresponding to the network device.

The processor 1101 is configured to: determine the configuration information; wherein the configuration information is used to indicate the terminal device to determine not to skip the PDCCH monitoring on a target serving cell in the first serving cell set indicated by the monitoring indication message according to the configuration information, in a case where the terminal device does not receive a response to the scheduling request from the network device.

It is to be understood that the processor in embodiments of the present disclosure may be an integrated circuit chip and has a signal processing capability. In an implementation, the steps in the method embodiments may be completed by an integrated logical circuit of hardware in the processor or an instruction in a software form. The processor may be a universal processor, a Digital Signal Processor (DSP), an Application Specific Integrated Circuit (ASIC), a Field Programmable Gate Array (FPGA) or other programmable logical device, a discrete gate or a transistor logical device, or a discrete hardware component, which can implement or perform the methods, operations and logical block diagrams disclosed in embodiments of the present disclosure. The universal processor may be a microprocessor, or the processor may also be any conventional processor and the like. The steps of the methods disclosed in combination with embodiments of the present disclosure may be directly embodied as being executed and completed by a hardware decoding processor or executed and completed by a combination of hardware and software modules in the decoding processor. The software modules may be located in a mature storage medium in the art, such as a Random Access Memory (RAM), a flash memory, a Read-Only memory (ROM), a Programmable ROM (PROM) or Electrically Erasable PROM (EEPROM) and a register. The storage medium is located in a memory, the processor reads information in the memory, and completes steps of the methods in combination with hardware.

It can be understood that the memory in embodiments of the present disclosure may be a volatile memory or a nonvolatile memory, or may include both the volatile and nonvolatile memories. The nonvolatile memory may be a ROM, a PROM, an Erasable PROM (EPROM), an Electrically EPROM (EEPROM) or a flash memory. The volatile memory may be a RAM, and is used as an external high-speed cache. By way of exemplary illustration but not limitation, RAMs in various forms may be adopted, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) and a Direct Rambus RAM (DR RAM). It is to be noted that the memory in the systems and methods described in the present disclosure is intended to include, but is not limited to, memories of these and any other proper types.

It should be understood that the foregoing memory is exemplary rather than limiting. For example, the memory in embodiments of the present disclosure may also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch-Link DRAM (SLDRAM), a Direct Rambus RAM (DR RAM), among others. That is to say, the memory in embodiments of the present disclosure is intended to include but is not limited to those and any other suitable types of memories.

Embodiments of the present disclosure further provide a computer-readable storage medium. The computer-readable storage medium is configured to store a computer program.

Optionally, the computer-readable storage medium may be applied to the network device in embodiments of the present disclosure, and the computer program causes a computer to carry out respective processes implemented by the network device in various methods of embodiments of the present disclosure. For the sake of brevity, details are not described herein again.

Optionally, the computer-readable storage medium may be applied to the mobile terminal/terminal device in embodiments of the present disclosure, and the computer program causes a computer to carry out respective processes implemented by the mobile terminal/terminal device in various methods of embodiments of the present disclosure. For the sake of brevity, details are not described herein again.

Embodiments of the present disclosure further provide a computer program product that includes computer program instructions.

Optionally, the computer program product may be applied to the network device in embodiments of the present disclosure, and the computer program instructions cause a computer to carry out respective processes implemented by the network device in various methods of embodiments of the present disclosure. For the sake of brevity, details are not described herein again.

Optionally, the computer program product may be applied to the mobile terminal/terminal device in embodiments of the present disclosure, and the computer program instructions cause a computer to carry out respective processes implemented by the mobile terminal/terminal device in various methods of embodiments of the present disclosure. For the sake of brevity, details are not described herein again.

Embodiments of the present disclosure further provide a computer program.

Optionally, the computer program may be applied to the network device in embodiments of the present disclosure. When running on a computer, the computer program causes the computer to carry out respective processes implemented by the network device in various methods of embodiments of the present disclosure. For the sake of brevity, details are not described herein again.

Optionally, the computer program may be applied to the mobile terminal/terminal device in embodiments of the present disclosure. When running on a computer, the computer program causes the computer to carry out respective processes implemented by the mobile terminal/terminal device in various methods of embodiments of the present disclosure. For the sake of brevity, details are not described herein again.

Those of ordinary skill in the art will appreciate that the exemplary units and algorithm steps described in connection with the embodiments disclosed herein may be carried out by electronic hardware or a combination of electronic hardware and computer software. Whether the functions are implemented by hardware or software depends on particular applications and design constraints of the technical solutions. A person skilled in the art can use a different method to implement the described functions for each of the particular applications, and such implementation should not be considered as going beyond the scope of the present disclosure.

It may be clearly understood by a person skilled in the art that, for the purpose of convenient and brief description, with respect to a detailed working process of the system, device, and unit, reference may be made to a corresponding process in the foregoing method embodiments, details of which are not described herein again.

According to embodiments provided by the present disclosure, it should be understood that the disclosed systems, devices and methods may be implemented in other ways. For example, the device embodiments described above are merely illustrative. For example, the division of units is only a kind of logical function division. In practice implementations, there may be other division manners. For example, multiple units or components may be combined or integrated into another system, or some features may be ignored or not performed. In addition, the illustrated or discussed mutual coupling or direct coupling or communication connection may be indirect coupling or communication connection through some interfaces, devices or units, and may be in electrical, mechanical or other forms.

The units described as separated parts may be or may not be physically separated, and the parts displayed as units may be or may not be physical units. That is, the units may be located in one place, or may be distributed over multiple network units. Some or all of the units may be selected according to actual needs to achieve the objectives of the solutions in embodiments.

In addition, individual functional units in each embodiment of the present disclosure may be integrated in one processing unit, or the units may exist alone physically, or two or more units may be integrated in one unit.

The functions may also be stored in a computer-readable storage medium if being implemented in the form of software functional unit and sold or used as an independent product. Based on such understanding, the essence of the technical solutions of the present disclosure, or the part contributing to the prior art or part of the technical solutions, may be embodied in the form of software product. The computer software product is stored in a storage medium and includes instructions to cause a computer device (which may be a personal computer, a server, or a controlling device, etc.) to perform all or part of steps of the methods described in the embodiments of the present disclosure. The foregoing storage medium includes any medium that is capable of storing program codes, such as a USB disk, a mobile hard disk, a Read-Only Memory (ROM), a Random Access Memory (RAM), a magnetic disk, an optical disk, or the like.

Those described above are merely specific embodiments of the present disclosure, and the protection scope of the present disclosure is not limited thereto. Therefore, the protection scope of the present disclosure should be defined by the appended claims.

## Claims

1. A Physical Downlink Control Channel, PDCCH, monitoring method, comprising:
sending (S102), by a terminal device, a scheduling request to a network device;
acquiring (S104), by the terminal device, a monitoring indication message sent by the network device, wherein the monitoring indication message is used to indicate to skip PDCCH monitoring on a first serving cell set corresponding to the network device; and
determining (S106), by the terminal device according to acquired configuration information, not to skip the PDCCH monitoring on a target serving cell in the first serving cell set indicated by the monitoring indication message, in a case where the terminal device does not receive a response to the scheduling request from the network device,
wherein the configuration information further comprises first configuration information, the first configuration information is configured to configure an uplink resource for transmitting the scheduling request in a case where a target uplink logical channel corresponding to the terminal device triggers the scheduling request or beam failure recovery, and when the configuration information comprises only the first configuration information and the terminal device does not receive the response to the scheduling request from the network device, the determining, by the terminal device according to the configuration information, not to skip the PDCCH monitoring on the target serving cell in the first serving cell set indicated by the monitoring indication message comprises:
determining, by the terminal device according to the first configuration information, not to skip the PDCCH monitoring on all serving cells in the first serving cell set indicated by the monitoring indication message.

2. A Physical Downlink Control Channel, PDCCH, monitoring method, comprising:
sending (S102), by a terminal device, a scheduling request to a network device;
acquiring (S104), by the terminal device, a monitoring indication message sent by the network device, wherein the monitoring indication message is used to indicate to skip PDCCH monitoring on a first serving cell set corresponding to the network device; and
determining (S106), by the terminal device according to acquired configuration information, not to skip the PDCCH monitoring on a target serving cell in the first serving cell set indicated by the monitoring indication message, in a case where the terminal device does not receive a response to the scheduling request from the network device,
wherein the configuration information further comprises first configuration information, the first configuration information is configured to configure an uplink resource for transmitting the scheduling request in a case where a target uplink logical channel corresponding to the terminal device triggers the scheduling request or beam failure recovery, the configuration information further comprises second configuration information, and the second configuration information is configured to configure a logical channel restriction of the uplink logical channel,
wherein when the configuration information comprises the second configuration information and no response to the scheduling request from the serving cell is received, the determining, by the terminal device according to the configuration information, not to skip the PDCCH monitoring on the target serving cell in the first serving cell set indicated by the monitoring indication message comprises:
determining, by the terminal device according to the second configuration information, not to skip the PDCCH monitoring on a serving cell corresponding to the logical channel restriction in the first serving cell set indicated by the monitoring indication message,
wherein the logical channel restriction comprises at least one of:
a list of serving cells that are allowed for transmission of the uplink logical channel; and
a list of Subcarrier Spacings, SCSs, that are allowed for transmission of the uplink logical channel,
wherein the determining, by the terminal device according to the second configuration information, not to skip the PDCCH monitoring on the serving cell corresponding to the logical channel restriction in the first serving cell set indicated by the monitoring indication message comprises:
determining, by the terminal device, a second serving cell set according to the list of serving cells that are allowed for transmission of the uplink logical channel and/or the list of Subcarrier Spacings, SCSs, that are allowed for transmission of the uplink logical channel, wherein the second serving cell set is a set of serving cells that allow transmission of the uplink logical channel; and
determining, by the terminal device according to the second serving cell set, not to skip the PDCCH monitoring on the target serving cell in the first serving cell set indicated by the monitoring indication message,
wherein the determining, by the terminal device according to the second serving cell set, not to skip the PDCCH monitoring on the target serving cell in the first serving cell set indicated by the monitoring indication message comprises:
determining, by the terminal device, a third serving cell set corresponding to the second serving cell set according to a cross-carrier scheduling configuration; and
determining, by the terminal device according to the third serving cell set, not to skip the PDCCH monitoring on the target serving cell in the first serving cell set indicated by the monitoring indication message,
wherein the method further comprises:
determining, by the terminal device according to the second serving cell set, to ignore skipping of the PDCCH monitoring on the target serving cell belonging to the first serving cell set indicated by the monitoring indication message; and
determining, by the terminal device according to the second serving cell set, to skip the PDCCH monitoring on a target serving cell not belonging to the first serving cell set indicated by the monitoring indication message.

3. A Physical Downlink Control Channel, PDCCH, monitoring method, comprising:
sending (S102), by a terminal device, a scheduling request to a network device;
acquiring (S104), by the terminal device, a monitoring indication message sent by the network device, wherein the monitoring indication message is used to indicate to skip PDCCH monitoring on a first serving cell set corresponding to the network device; and
determining (S106), by the terminal device according to acquired configuration information, not to skip the PDCCH monitoring on a target serving cell in the first serving cell set indicated by the monitoring indication message, in a case where the terminal device does not receive a response to the scheduling request from the network device,
wherein the configuration information further comprises first configuration information, the first configuration information is configured to configure an uplink resource for transmitting the scheduling request in a case where a target uplink logical channel corresponding to the terminal device triggers the scheduling request or beam failure recovery, the configuration information further comprises third configuration information, and the third configuration information is configured to to configure the uplink logical channel to allow ignoring skipping of the PDCCH monitoring or to configure the uplink logical channel to not allow ignoring the skipping of the PDCCH monitoring,
wherein when the configuration information comprises the third configuration information and the terminal device does not receive the response to the scheduling request from the network device, the determining, by the terminal device according to the configuration information, not to skip the PDCCH monitoring on the target serving cell in the first serving cell set indicated by the monitoring indication message comprises:
determining, by the terminal device, not to skip the PDCCH monitoring on all serving cells in the first serving cell set, in a case where the third configuration information is used to configure the uplink logical channel to allow ignoring the skipping of the PDCCH monitoring; and
determining, by the terminal device, to skip the PDCCH monitoring on the all serving cells in the first serving cell set, in a case where the third configuration information is used to configure the uplink logical channel to not allow ignoring the skipping of the PDCCH monitoring,
wherein the third configuration information being configured to configure the uplink logical channel to allow ignoring the skipping of the PDCCH monitoring or to configure the uplink logical channel to not allow ignoring the skipping of the PDCCH monitoring comprises:
in a case where the uplink logical channel supports a latency-sensitive service, the third configuration information is used to configure the uplink logical channel to allow ignoring the skipping of the PDCCH monitoring; and
in a case where the uplink logical channel supports a non-latency-sensitive service, the third configuration information is configured to configure the uplink logical channel to not allow ignoring the skipping of the PDCCH monitoring.

4. The method according to any one of claims 1-3, wherein after receiving the response to the scheduling request from the network device, the method further comprises:
skipping, by the terminal device, the PDCCH monitoring on the first serving cell set corresponding to the network device according to the monitoring indication message; or,
maintaining, by the terminal device, not skipping the PDCCH monitoring on the target serving cell.

5. The method according to any one of claims 1 to 4 wherein in a case where carrier aggregation is supported, the first serving cell set comprises at least one of the following: a primary cell, and one or more secondary cells.

6. The method according to any one of claims 1-5, wherein the monitoring indication message further indicates a duration for PDCCH skipping.

7. The method according to any one of claims 1-4, wherein the acquired configuration information comprises Discontinuous Reception, DRX, configuration information, the DRX configuration information is configured to indicate the terminal device to discontinuously monitor the PDCCH, and the DRX configuration information comprises a long DRX cycle, a DRX-on duration timer, and a DRX inactivity timer.

8. A Physical Downlink Control Channel, PDCCH, monitoring indication method, comprising:
sending (S202), by a network device, configuration information to a terminal device;
acquiring (S204), by the network device, a scheduling request sent by the terminal device according to the configuration information; and
sending (S206), by the network device, a monitoring indication message to the terminal device, wherein the monitoring indication message is configured to indicate to skip PDCCH monitoring on a first serving cell set corresponding to the network device;
wherein the configuration information is configured to indicate the terminal device to determine not to skip the PDCCH monitoring on a target serving cell in the first serving cell set indicated by the monitoring indication message according to the configuration information, in a case where the terminal device does not receive a response to the scheduling request from the network device,
wherein the configuration information further comprises second configuration information, and the second configuration information is configured to configure a logical channel restriction of the uplink logical channel,
wherein the logical channel restriction comprises at least one of:
a list of serving cells that are allowed for transmission of the uplink logical channel; and
a list of Subcarrier Spacings, SCSs, that are allowed for transmission of the uplink logical channel.

9. A Physical Downlink Control Channel, PDCCH, monitoring indication method, comprising:
sending (S202), by a network device, configuration information to a terminal device;
acquiring (S204), by the network device, a scheduling request sent by the terminal device according to the configuration information; and
sending (S206), by the network device, a monitoring indication message to the terminal device, wherein the monitoring indication message is used to indicate to skip PDCCH monitoring on a first serving cell set corresponding to the network device;
wherein the configuration information is configured to indicate the terminal device to determine not to skip the PDCCH monitoring on a target serving cell in the first serving cell set indicated by the monitoring indication message according to the configuration information, in a case where the terminal device does not receive a response to the scheduling request from the network device,
wherein the configuration information further comprises third configuration information, the third configuration information is configured to configure the uplink logical channel to allow ignoring skipping of the PDCCH monitoring or to configure the uplink logical channel to not allow ignoring the skipping of the PDCCH monitoring, and in a case where the uplink logical channel supports a latency-sensitive service, the third configuration information is configured to configure the uplink logical channel to allow ignoring the skipping of the PDCCH monitoring; and
in a case where the uplink logical channel supports a non-latency-sensitive service, the third configuration information is configured to configure the uplink logical channel to not allow ignoring the skipping of the PDCCH monitoring.

10. The method according to any one of claims 8-9, wherein the monitoring indication message further indicates a duration for PDCCH skipping.

11. The method according to any one of claims 8-9, wherein the configuration information comprises Discontinuous Reception, DRX, configuration information, the DRX configuration information is used to indicate the terminal device to discontinuously monitor the PDCCH, and the DRX configuration information comprises a long DRX cycle, a DRX-on duration timer, and a DRX inactivity timer.

12. A terminal device, comprising means for carrying out the method according to any one of claims 1 to 7.

13. A network device, comprising means for carrying out the method according to any one of claims 8 to 11.

## Patentansprüche

1. Verfahren zum Überwachen eines physikalischen Downlink-Steuerkanals, PDCCH (Physical Downlink Control Channel), umfassend:
Senden (S102), durch eine Endgerätvorrichtung, einer Planungsanforderung an eine Netzvorrichtung;
Erfassen (S104), durch die Endgerätvorrichtung, einer Überwachungsanzeigenachricht, die durch die Netzvorrichtung gesendet wird, wobei die Überwachungsanzeigenachricht verwendet wird, um die PDCCH-Überwachung an einer ersten Gruppe bedienender Zellen, die der Netzvorrichtung entspricht, zu überspringen; und
Bestimmen (S106), durch die Endgerätvorrichtung gemäß den erfassten Konfigurationsinformationen, die PDCCH-Überwachung an einer bedienenden Zielzelle in der ersten Gruppe bedienender Zellen, die durch die Überwachungsanzeigenachricht angegeben wird, nicht zu überspringen, in einem Fall, in dem die Endgerätvorrichtung keine Antwort auf die Planungsanforderung von der Netzvorrichtung erhält,
wobei die Konfigurationsinformationen ferner erste Konfigurationsinformationen umfassen, wobei die ersten Konfigurationsinformationen dafür ausgelegt sind, eine Uplink-Ressource zum Übertragen der Planungsanforderung in einem Fall zu konfigurieren, in dem ein logischer Ziel-Uplink-Kanal, der der Endgerätvorrichtung entspricht, die Planungsanforderung oder die Wiederherstellung nach Strahlausfall auslöst, und wenn die Konfigurationsinformationen nur die ersten Konfigurationsinformationen umfassen und die Endgerätvorrichtung die Antwort auf die Planungsanforderung von der Netzvorrichtung nicht empfängt, umfasst das Bestimmen, durch die Endgerätvorrichtung gemäß den Konfigurationsinformationen, die PDCCH-Überwachung an der bedienenden Zielzelle in der ersten Gruppe bedienender Zellen, die durch die Überwachungsanzeigenachricht angegeben wird, nicht zu überspringen:
Bestimmen, durch die Endgerätvorrichtung gemäß den ersten Konfigurationsinformationen, die PDCCH-Überwachung an allen bedienenden Zellen in der ersten Gruppe bedienender Zellen, die durch die Überwachungsanzeigenachricht angegeben wird, nicht zu überspringen.

2. Verfahren zum Überwachen eines physikalischen Downlink-Steuerkanals, PDCCH (Physical Downlink Control Channel), umfassend:
Senden (S102), durch eine Endgerätvorrichtung, einer Planungsanforderung an eine Netzvorrichtung;
Erfassen (S104), durch die Endgerätvorrichtung, einer Überwachungsanzeigenachricht, die durch die Netzvorrichtung gesendet wird, wobei die Überwachungsanzeigenachricht verwendet wird, um anzuzeigen, die PDCCH-Überwachung an einer ersten Gruppe bedienender Zellen, die der Netzvorrichtung entspricht, zu überspringen; und
Bestimmen (S106), durch die Endgerätvorrichtung gemäß den erfassten Konfigurationsinformationen, die PDCCH-Überwachung an einer bedienenden Zielzelle in der ersten Gruppe bedienender Zellen, die durch die Überwachungsanzeigenachricht angegeben wird, nicht zu überspringen, in einem Fall, in dem die Endgerätvorrichtung keine Antwort auf die Planungsanforderung von der Netzvorrichtung erhält,
wobei die Konfigurationsinformationen ferner erste Konfigurationsinformationen umfassen, wobei die ersten Konfigurationsinformationen dafür ausgelegt sind, eine Uplink-Ressource zum Übertragen der Planungsanforderung in einem Fall zu konfigurieren, in dem ein logischer Ziel-Uplink-Kanal, der der Endgerätvorrichtung entspricht, die Planungsanforderung oder die Wiederherstellung nach Strahlausfall auslöst, wobei die Konfigurationsinformationen ferner zweite Konfigurationsinformationen umfassen und die zweiten Konfigurationsinformationen dafür ausgelegt sind, eine logische Kanalbeschränkung des logischen Uplink-Kanals zu konfigurieren,
wobei, wenn die Konfigurationsinformationen die zweiten Konfigurationsinformationen umfassen und keine Antwort auf die Planungsanforderung von der bedienenden Zelle empfangen wird, das Bestimmen, durch die Endgerätvorrichtung gemäß den Konfigurationsinformationen, die PDCCH-Überwachung an der bedienenden Zielzelle in der ersten Gruppe bedienender Zellen, die durch die Überwachungsanzeigenachricht angegeben wird, nicht zu überspringen, umfasst:
Bestimmen, durch die Endgerätvorrichtung gemäß den zweiten Konfigurationsinformationen, die PDCCH-Überwachung an einer bedienenden Zelle, die der logischen Kanalbeschränkung in der ersten Gruppe bedienender Zellen entspricht, die durch die Überwachungsanzeigenachricht angegeben wird, nicht zu überspringen,
wobei die logische Kanalbeschränkung mindestens eines der folgenden umfasst:
eine Liste bedienender Zellen, die für die Übertragung des logischen Uplink-Kanals zugelassen sind; und
eine Liste von Unterträgerabständen, SCS (Subcarrier Spacings), die für die Übertragung des logischen Uplink-Kanals zugelassen sind,
wobei das Bestimmen, durch die Endgerätvorrichtung gemäß den zweiten Konfigurationsinformationen, die PDCCH-Überwachung an einer bedienenden Zelle, die der logischen Kanalbeschränkung in der ersten Gruppe bedienender Zellen entspricht, die durch die Überwachungsanzeigenachricht angegeben wird, nicht zu überspringen, umfasst:
Bestimmen, durch die Endgerätvorrichtung, einer zweiten Gruppe bedienender Zellen gemäß der Liste bedienender Zellen, die für die Übertragung des logischen Uplink-Kanals zugelassen sind, und/oder der Liste von Unterträgerabständen, SCS, die für die Übertragung des logischen Uplink-Kanals zugelassen sind, wobei die zweite Gruppe bedienender Zellen eine Gruppe bedienender Zellen ist, die die Übertragung des logischen Uplink-Kanals zulassen; und
Bestimmen, durch die Endgerätvorrichtung gemäß der zweiten Gruppe bedienender Zellen, die PDCCH-Überwachung an der bedienenden Zielzelle in der ersten Gruppe bedienender Zellen, die durch die Überwachungsanzeigenachricht angegeben wird, nicht zu überspringen,
wobei das Bestimmen, durch die Endgerätvorrichtung gemäß der zweiten Gruppe bedienender Zellen, die PDCCH-Überwachung an der bedienenden Zielzelle in der ersten Gruppe bedienender Zellen, die durch die Überwachungsanzeigenachricht angegeben wird, nicht zu überspringen, umfasst:
Bestimmen, durch die Endgerätvorrichtung, einer dritten Gruppe bedienender Zellen, die der zweiten Gruppe bedienender Zellen entspricht, gemäß einer trägerübergreifenden Planungskonfiguration; und
Bestimmen, durch die Endgerätvorrichtung gemäß der dritten Gruppe bedienender Zellen, die PDCCH-Überwachung an der bedienenden Zielzelle in der ersten Gruppe bedienender Zellen, die durch die Überwachungsanzeigenachricht angegeben wird, nicht zu überspringen,
wobei das Verfahren ferner umfasst:
Bestimmen, durch die Endgerätvorrichtung gemäß der zweiten Gruppe bedienender Zellen, das Überspringen der PDCCH-Überwachung an der bedienenden Zielzelle, die zur ersten Gruppe bedienender Zellen gehört, die durch die Überwachungsanzeigenachricht angegeben wird, zu ignorieren; und
Bestimmen, durch die Endgerätvorrichtung gemäß der zweiten Gruppe bedienender Zellen, die PDCCH-Überwachung an einer bedienenden Zielzelle, die nicht zur ersten Gruppe bedienender Zellen gehört, die durch die Überwachungsanzeigenachricht angegeben wird, zu überspringen.

3. Verfahren zum Überwachen eines physikalischen Downlink-Steuerkanals, PDCCH (Physical Downlink Control Channel), umfassend:
Senden (S102), durch eine Endgerätvorrichtung, einer Planungsanforderung an eine Netzvorrichtung;
Erfassen (S104), durch die Endgerätvorrichtung, einer Überwachungsanzeigenachricht, die durch die Netzvorrichtung gesendet wird, wobei die Überwachungsanzeigenachricht verwendet wird, um anzuzeigen, die PDCCH-Überwachung an einer ersten Gruppe bedienender Zellen, die der Netzvorrichtung entspricht, zu überspringen; und
Bestimmen (S106), durch die Endgerätvorrichtung gemäß den erfassten Konfigurationsinformationen, die PDCCH-Überwachung an einer bedienenden Zielzelle in der ersten Gruppe bedienender Zellen, die durch die Überwachungsanzeigenachricht angegeben wird, nicht zu überspringen, in einem Fall, in dem die Endgerätvorrichtung keine Antwort auf die Planungsanforderung von der Netzvorrichtung erhält,
wobei die Konfigurationsinformationen ferner erste Konfigurationsinformationen umfassen, wobei die ersten Konfigurationsinformationen dafür ausgelegt sind, eine Uplink-Ressource zum Übertragen der Planungsanforderung in einem Fall zu konfigurieren, in dem ein logischer Ziel-Uplink-Kanal, der der Endgerätvorrichtung entspricht, die Planungsanforderung oder die Wiederherstellung nach Strahlausfall auslöst, wobei die Konfigurationsinformationen ferner dritte Konfigurationsinformationen umfassen und die dritten Konfigurationsinformationen dafür ausgelegt sind, den logischen Uplink-Kanal dafür zu konfigurieren, zuzulassen, das Überspringen der PDCCH-Überwachung zu ignorieren, oder den logischen Uplink-Kanal dafür zu konfigurieren, nicht zuzulassen, das Überspringen der PDCCH-Überwachung zu ignorieren,
wobei, wenn die Konfigurationsinformationen die dritten Konfigurationsinformationen umfassen und die Endgerätvorrichtung die Antwort auf die Planungsanforderung von der Netzvorrichtung nicht empfängt, das Bestimmen, durch die Endgerätvorrichtung gemäß den Konfigurationsinformationen, die PDCCH-Überwachung an der bedienenden Zielzelle in der ersten Gruppe bedienender Zellen, die durch die Überwachungsanzeigenachricht angegeben wird, nicht zu überspringen, umfasst:
Bestimmen, durch die Endgerätvorrichtung, die PDCCH-Überwachung an allen bedienenden Zellen in der ersten Gruppe bedienender Zellen nicht zu überspringen, in einem Fall, in dem die dritten Konfigurationsinformationen verwendet werden, um den logischen Uplink-Kanal dafür zu konfigurieren, zuzulassen, das Überspringen der PDCCH-Überwachung zu ignorieren; und
Bestimmen, durch die Endgerätvorrichtung, die PDCCH-Überwachung an allen bedienenden Zellen in der ersten Gruppe bedienender Zellen zu überspringen, in einem Fall, in dem die dritten Konfigurationsinformationen verwendet werden, um den logischen Uplink-Kanal dafür zu konfigurieren, nicht zuzulassen, das Überspringen der PDCCH-Überwachung zu ignorieren,
wobei die Tatsache, dass die dritten Konfigurationsinformationen dafür ausgelegt sind, den logischen Uplink-Kanal dafür zu konfigurieren, zuzulassen, das Überspringen der PDCCH-Überwachung zu ignorieren, oder den logischen Uplink-Kanal dafür zu konfigurieren, nicht zuzulassen, das Überspringen der PDCCH-Überwachung zu ignorieren, umfasst:
in einem Fall, in dem der logische Uplink-Kanal einen latenzempfindlichen Dienst unterstützt, werden die dritten Konfigurationsinformationen verwendet, um den logischen Uplink-Kanal dafür zu konfigurieren, zuzulassen, das Überspringen der PDCCH-Überwachung zu ignorieren; und
in einem Fall, in dem der logische Uplink-Kanal einen nicht latenzempfindlichen Dienst unterstützt, sind die dritten Konfigurationsinformationen dafür ausgelegt, den logischen Uplink-Kanal dafür zu konfigurieren, nicht zuzulassen, das Überspringen der PDCCH-Überwachung zu ignorieren.

4. Verfahren gemäß einem der Ansprüche 1-3, wobei, nach dem Empfangen der Antwort auf die Planungsanforderung von der Netzvorrichtung, das Verfahren ferner umfasst:
Überspringen, durch die Endgerätvorrichtung, der PDCCH-Überwachung an der ersten Gruppe bedienender Zellen, die der Netzvorrichtung gemäß der Überwachungsanzeigenachricht entspricht; oder Beibehalten, durch die Endgerätvorrichtung, die PDCCH-Überwachung an der bedienenden Zielzelle nicht zu überspringen.

5. Verfahren gemäß einem der Ansprüche 1 bis 4, wobei in einem Fall, in dem Trägeraggregation unterstützt wird, die erste Gruppe bedienender Zellen mindestens eine der folgenden umfasst: eine Primärzelle und eine oder mehrere Sekundärzellen.

6. Verfahren gemäß einem der Ansprüche 1-5, wobei die Überwachungsanzeigenachricht ferner eine Dauer für das PDCCH-Überspringen angibt.

7. Verfahren gemäß einem der Ansprüche 1-4, wobei die erfassten Konfigurationsinformationen Konfigurationsinformationen für den diskontinuierlichen Empfang, DRX (Discontinuous Reception), umfassen, die DRX-Konfigurationsinformationen dafür ausgelegt sind, der Endgerätvorrichtung anzuzeigen, den PDCCH diskontinuierlich zu überwachen, und die DRX-Konfigurationsinformationen einen langen DRX-Zyklus, einen Zeitgeber für die DRX-Einschaltdauer und einen Zeitgeber für DRX-Inaktivität umfassen.

8. Anzeigeverfahren für das Überwachen eines physikalischen Downlink-Steuerkanals, PDCCH, umfassend:
Senden (S202), durch eine Netzvorrichtung, von Konfigurationsinformationen an eine Endgerätvorrichtung;
Erfassen (S204), durch die Netzvorrichtung, einer Planungsanforderung, die durch die Endgerätvorrichtung gemäß den Konfigurationsinformationen gesendet wird; und
Senden (S206), durch die Netzvorrichtung, einer Überwachungsanzeigenachricht an die Endgerätvorrichtung, wobei die Überwachungsanzeigenachricht dafür ausgelegt ist anzuzeigen, die PDCCH-Überwachung an einer ersten Gruppe bedienender Zellen, die der Netzvorrichtung entspricht, zu überspringen;
wobei die Konfigurationsinformationen dafür ausgelegt sind, der Endgerätvorrichtung anzuzeigen, zu bestimmen, die PDCCH-Überwachung an einer bedienenden Zielzelle in der ersten Gruppe bedienender Zellen, die durch die Überwachungsanzeigenachricht gemäß den Konfigurationsinformationen angegeben wird, nicht zu überspringen, in einem Fall, in dem die Endgerätvorrichtung keine Antwort auf die Planungsanforderung von der Netzvorrichtung erhält,
wobei die Konfigurationsinformationen ferner zweite Konfigurationsinformationen umfassen und die zweiten Konfigurationsinformationen dafür ausgelegt sind, eine logische Kanalbeschränkung des logischen Uplink-Kanals zu konfigurieren,
wobei die logische Kanalbeschränkung mindestens eines der folgenden umfasst:
eine Liste bedienender Zellen, die für die Übertragung des logischen Uplink-Kanals zugelassen sind; und
eine Liste von Unterträgerabständen, SCS, die für die Übertragung des logischen Uplink-Kanals zugelassen sind.

9. Anzeigeverfahren für das Überwachen eines physikalischen Downlink-Steuerkanals, PDCCH, umfassend:
Senden (S202), durch eine Netzvorrichtung, von Konfigurationsinformationen an eine Endgerätvorrichtung;
Erfassen (S204), durch die Netzvorrichtung, einer Planungsanforderung, die durch die Endgerätvorrichtung gemäß den Konfigurationsinformationen gesendet wird; und
Senden (S206), durch die Netzvorrichtung, einer Überwachungsanzeigenachricht an die Endgerätvorrichtung, wobei die Überwachungsanzeigenachricht dafür verwendet wird, anzuzeigen, die PDCCH-Überwachung an einer ersten Gruppe bedienender Zellen, die der Netzvorrichtung entspricht, zu überspringen;
wobei die Konfigurationsinformationen dafür ausgelegt sind, der Endgerätvorrichtung anzuzeigen zu bestimmen, die PDCCH-Überwachung an einer bedienenden Zielzelle in der ersten Gruppe bedienender Zellen, die durch die Überwachungsanzeigenachricht gemäß den Konfigurationsinformationen angegeben wird, nicht zu überspringen, in einem Fall, in dem die Endgerätvorrichtung keine Antwort auf die Planungsanforderung von der Netzvorrichtung erhält,
wobei die Konfigurationsinformationen ferner dritte Konfigurationsinformationen umfassen und die dritten Konfigurationsinformationen dafür ausgelegt sind, den logischen Uplink-Kanal dafür zu konfigurieren, zuzulassen, das Überspringen der PDCCH-Überwachung zu ignorieren, oder den logischen Uplink-Kanal dafür zu konfigurieren, nicht zuzulassen, das Überspringen der PDCCH-Überwachung zu ignorieren, und in einem Fall, in dem der logische Uplink-Kanal einen latenzempfindlichen Dienst unterstützt, die dritten Konfigurationsinformationen dafür ausgelegt sind, den logischen Uplink-Kanal dafür zu konfigurieren, zuzulassen, das Überspringen der PDCCH-Überwachung zu ignorieren; und
in einem Fall, in dem der logische Uplink-Kanal einen nicht latenzempfindlichen Dienst unterstützt, die dritten Konfigurationsinformationen dafür ausgelegt sind, den logischen Uplink-Kanal dafür zu konfigurieren, nicht zuzulassen, das Überspringen der PDCCH-Überwachung zu ignorieren.

10. Verfahren gemäß einem der Ansprüche 8-9, wobei die Überwachungsanzeigenachricht ferner eine Dauer für das PDCCH-Überspringen angibt.

11. Verfahren gemäß einem der Ansprüche 8-9, wobei die Konfigurationsinformationen Konfigurationsinformationen für den diskontinuierlichen Empfang, DRX (Discontinuous Reception), umfassen, die DRX-Konfigurationsinformationen verwendet werden, um der Endgerätvorrichtung anzuzeigen, den PDCCH diskontinuierlich zu überwachen, und die DRX-Konfigurationsinformationen einen langen DRX-Zyklus, einen Zeitgeber für die DRX-Einschaltdauer und einen Zeitgeber für DRX-Inaktivität umfassen.

12. Endgerätvorrichtung, die Mittel zum Ausführen des Verfahrens gemäß einem der Ansprüche 1 bis 7 umfasst.

13. Netzvorrichtung, die Mittel zum Ausführen des Verfahrens gemäß einem der Ansprüche 8 bis 11 umfasst.

## Revendications

1. Procédé de surveillance d'un canal physique de commande de liaison descendante, PDCCH, comprenant :
l'envoi (S102), par un dispositif terminal, d'une demande de planification à un dispositif de réseau ;
l'acquisition (S104), par le dispositif terminal, d'un message d'indication de surveillance envoyé par le dispositif de réseau, dans lequel le message d'indication de surveillance est utilisé pour indiquer de sauter une surveillance de PDCCH sur un premier ensemble de cellules de service correspondant au dispositif de réseau ; et
la détermination (S106), par le dispositif terminal en fonction d'informations de configuration acquises, de ne pas sauter la surveillance de PDCCH sur une cellule de service cible du premier ensemble de cellules de service indiqué par le message d'indication de surveillance, dans un cas où le dispositif terminal ne reçoit pas de réponse à la demande de planification provenant du dispositif de réseau,
dans lequel les informations de configuration comprennent en outre des premières informations de configuration, les premières informations de configuration sont configurées pour configurer une ressource de liaison montante pour transmettre la demande de planification dans un cas où un canal logique de liaison montante cible correspondant au dispositif terminal déclenche la demande de planification ou une récupération de défaillance de faisceau, et lorsque les informations de configuration comprennent uniquement les premières informations de configuration et que le dispositif terminal ne reçoit pas la réponse à la demande de planification provenant du dispositif de réseau, la détermination, par le dispositif terminal en fonction des informations de configuration, de ne pas sauter la surveillance de PDCCH sur la cellule de service cible du premier ensemble de cellules de service indiqué par le message d'indication de surveillance comprend :
la détermination, par le dispositif terminal en fonction des premières informations de configuration, de ne pas sauter la surveillance de PDCCH sur toutes les cellules de service du premier ensemble de cellules de service indiqué par le message d'indication de surveillance.

2. Procédé de surveillance d'un canal physique de commande de liaison descendante, PDCCH, comprenant :
l'envoi (S102), par un dispositif terminal, d'une demande de planification à un dispositif de réseau ;
l'acquisition (S104), par le dispositif terminal, d'un message d'indication de surveillance envoyé par le dispositif de réseau, dans lequel le message d'indication de surveillance est utilisé pour indiquer de sauter une surveillance de PDCCH sur un premier ensemble de cellules de service correspondant au dispositif de réseau ; et
la détermination (S106), par le dispositif terminal en fonction d'informations de configuration acquises, de ne pas sauter la surveillance de PDCCH sur une cellule de service cible du premier ensemble de cellules de service indiqué par le message d'indication de surveillance, dans un cas où le dispositif terminal ne reçoit pas de réponse à la demande de planification provenant du dispositif de réseau,
dans lequel les informations de configuration comprennent en outre des premières informations de configuration, les premières informations de configuration sont configurées pour configurer une ressource de liaison montante pour transmettre la demande de planification dans un cas où un canal logique de liaison montante cible correspondant au dispositif terminal déclenche la demande de planification ou une récupération de défaillance de faisceau, les informations de configuration comprennent en outre des deuxièmes informations de configuration, et les deuxièmes informations de configuration sont configurées pour configurer une restriction de canal logique du canal logique de liaison montante,
dans lequel lorsque les informations de configuration comprennent les deuxièmes informations de configuration et qu'aucune réponse à la demande de planification provenant de la cellule de service n'est reçue, la détermination, par le dispositif terminal en fonction des informations de configuration, de ne pas sauter la surveillance de PDCCH sur la cellule de service cible du premier ensemble de cellules de service indiqué par le message d'indication de surveillance comprend :
la détermination, par le dispositif terminal en fonction des deuxièmes informations de configuration, de ne pas sauter la surveillance de PDCCH sur une cellule de service correspondant à la restriction de canal logique dans le premier ensemble de cellules de service indiqué par le message d'indication de surveillance,
dans lequel la restriction de canal logique comprend au moins l'un des éléments suivants :
une liste de cellules de service qui sont autorisées à transmettre le canal logique de liaison montante ; et
une liste d'espacements entre sous-porteuses, SCS, qui sont autorisés à transmettre le canal logique de liaison montante,
dans lequel la détermination, par le dispositif terminal en fonction des deuxièmes informations de configuration, de ne pas sauter la surveillance de PDCCH sur la cellule de service correspondant à la restriction de canal logique dans le premier ensemble de cellules de service indiqué par le message d'indication de surveillance comprend :
la détermination, par le dispositif terminal, d'un deuxième ensemble de cellules de service en fonction de la liste de cellules de service qui sont autorisées à transmettre le canal logique de liaison montante et/ou de la liste d'espacements entre sous-porteuses, SCS, qui sont autorisés à transmettre le canal logique de liaison montante, dans lequel le deuxième ensemble de cellules de service est un ensemble de cellules de service qui permettent la transmission du canal logique de liaison montante ; et
la détermination, par le dispositif terminal en fonction du deuxième ensemble de cellules de service, de ne pas sauter la surveillance de PDCCH sur la cellule de service cible du premier ensemble de cellules de service indiqué par le message d'indication de surveillance,
dans lequel la détermination, par le dispositif terminal en fonction du deuxième ensemble de cellules de service, de ne pas sauter la surveillance de PDCCH sur la cellule de service cible du premier ensemble de cellules de service indiqué par le message d'indication de surveillance comprend :
la détermination, par le dispositif terminal, d'un troisième ensemble de cellules de service correspondant au deuxième ensemble de cellules de service en fonction d'une configuration de planification entre porteuses ; et
la détermination, par le dispositif terminal en fonction du troisième ensemble de cellules de service, de ne pas sauter la surveillance de PDCCH sur la cellule de service cible du premier ensemble de cellules de service indiqué par le message d'indication de surveillance,
dans lequel le procédé comprend en outre :
la détermination, par le dispositif terminal en fonction du deuxième ensemble de cellules de service, d'ignorer le saut de la surveillance de PDCCH sur la cellule de service cible appartenant au premier ensemble de cellules de service indiqué par le message d'indication de surveillance ; et
la détermination, par le dispositif terminal en fonction du deuxième ensemble de cellules de service, de sauter la surveillance de PDCCH sur une cellule de service cible n'appartenant pas au premier ensemble de cellules de service indiqué par le message d'indication de surveillance.

3. Procédé de surveillance d'un canal physique de commande de liaison descendante, PDCCH, comprenant :
l'envoi (S102), par un **dispositif** terminal, d'une demande de planification à un dispositif de réseau ;
l'acquisition (S104), par le **dispositif** terminal, d'un message d'indication de surveillance envoyé par le dispositif de réseau, dans lequel le message d'indication de surveillance est utilisé pour indiquer de sauter une surveillance de PDCCH sur un premier ensemble de cellules de service correspondant au dispositif de réseau ; et
la détermination (S106), par le dispositif terminal en fonction d'informations de configuration acquises, de ne pas sauter la surveillance de PDCCH sur une cellule de service cible du premier ensemble de cellules de service indiqué par le message d'indication de surveillance, dans un cas où le dispositif terminal ne reçoit pas de réponse à la demande de planification provenant du dispositif de réseau,
dans lequel les informations de configuration comprennent en outre des premières informations de configuration, les premières informations de configuration sont configurées pour configurer une ressource de liaison montante pour transmettre la demande de planification dans un cas où un canal logique de liaison montante cible correspondant au dispositif terminal déclenche la demande de planification ou la récupération de défaillance de faisceau, les informations de configuration comprennent en outre des troisièmes informations de configuration, et les troisièmes informations de configuration sont configurées pour configurer le canal logique de liaison montante pour permettre d'ignorer le saut de la surveillance de PDCCH ou pour configurer le canal logique de liaison montante pour ne pas permettre d'ignorer le saut de la surveillance de PDCCH,
dans lequel lorsque les informations de configuration comprennent les troisièmes informations de configuration et que le dispositif terminal ne reçoit pas la réponse à la demande de planification provenant du dispositif de réseau, la détermination, par le dispositif terminal en fonction des informations de configuration, de ne pas sauter la surveillance de PDCCH sur la cellule de service cible du premier ensemble de cellules de service indiqué par le message d'indication de surveillance comprend :
la détermination, par le dispositif terminal, de ne pas sauter la surveillance de PDCCH sur toutes les cellules de service du premier ensemble de cellules de service, dans un cas où les troisièmes informations de configuration sont utilisées pour configurer le canal logique de liaison montante pour permettre d'ignorer le saut de la surveillance de PDCCH ; et
la détermination, par le dispositif terminal, de sauter la surveillance de PDCCH sur toutes les cellules de service du premier ensemble de cellules de service, dans un cas où les troisièmes informations de configuration sont utilisées pour configurer le canal logique de liaison montante pour ne pas permettre d'ignorer le saut de la surveillance de PDCCH,
dans lequel la configuration des troisièmes informations de configuration pour configurer le canal logique de liaison montante pour permettre d'ignorer le saut de la surveillance de PDCCH ou pour configurer le canal logique de liaison montante pour ne pas permettre d'ignorer le saut de la surveillance de PDCCH comprend :
dans un cas où le canal logique de liaison montante prend en charge un service sensible à la latence, les troisièmes informations de configuration sont utilisées pour configurer le canal logique de liaison montante pour permettre d'ignorer le saut de la surveillance de PDCCH ; et
dans un cas où le canal logique de liaison montante prend en charge un service non sensible à la latence, les troisièmes informations de configuration sont utilisées pour configurer le canal logique de liaison montante pour ne pas permettre d'ignorer le saut de la surveillance de PDCCH.

4. Procédé selon l'une quelconque des revendications 1 à 3, dans lequel après la réception de la réponse à la demande de planification provenant du dispositif de réseau, le procédé comprend en outre :
le saut, par le dispositif terminal, de la surveillance de PDCCH sur le premier ensemble de cellules de service correspondant au dispositif de réseau en fonction du message d'indication de surveillance ; ou
le maintien, par le dispositif terminal, de l'absence de saut de la surveillance de PDCCH sur la cellule de service cible.

5. Procédé selon l'une quelconque des revendications 1 à 4, dans lequel dans un cas où une agrégation de porteuses est prise en charge, le premier ensemble de cellules de service comprend au moins l'une des cellules suivantes : une cellule primaire et une ou plusieurs cellules secondaires.

6. Procédé selon l'une quelconque des revendications 1 à 5, dans lequel le message d'indication de surveillance indique en outre une durée pour le saut de PDCCH.

7. Procédé selon l'une quelconque des revendications 1 à 4, dans lequel les informations de configuration acquises comprennent des informations de configuration de réception discontinue, DRX, les informations de configuration DRX sont configurées pour indiquer au dispositif terminal de surveiller de façon discontinue le PDCCH, et les informations de configuration DRX comprennent un cycle DRX long, un minuteur de durée de DRX et un minuteur d'inactivité de DRX.

8. Procédé d'indication de surveillance d'un canal physique de commande de liaison descendante, PDCCH, comprenant :
l'envoi (S202), par un dispositif de réseau, d'informations de configuration à un dispositif terminal ;
l'acquisition (S204), par le dispositif de réseau, d'une demande de planification envoyée par le dispositif terminal en fonction des informations de configuration ; et
l'envoi (S206), par le dispositif de réseau, d'un message d'indication de surveillance au dispositif terminal, dans lequel le message d'indication de surveillance est configuré pour indiquer de sauter une surveillance de PDCCH sur un premier ensemble de cellules de service correspondant au dispositif de réseau ;
dans lequel les informations de configuration sont configurées pour indiquer au dispositif terminal de déterminer de ne pas sauter la surveillance de PDCCH sur une cellule de service cible du premier ensemble de cellules de service indiqué par le message d'indication de surveillance en fonction des informations de configuration, dans un cas où le dispositif terminal ne reçoit pas de réponse à la demande de planification provenant du dispositif de réseau,
dans lequel les informations de configuration comprennent en outre des deuxièmes informations de configuration, et les deuxièmes informations de configuration sont configurées pour configurer une restriction de canal logique du canal logique de liaison montante,
dans lequel la restriction de canal logique comprend au moins l'un des éléments suivants :
une liste de cellules de service qui sont autorisées à transmettre le canal logique de liaison montante ; et
une liste d'espacements entre sous-porteuses, SCS, qui sont autorisés à transmettre le canal logique de liaison montante.

9. Procédé d'indication de surveillance d'un canal physique de commande de liaison descendante, PDCCH, comprenant :
l'envoi (S202), par un dispositif de réseau, d'informations de configuration à un dispositif terminal ;
l'acquisition (S204), par le dispositif de réseau, d'une demande de planification envoyée par le dispositif terminal en fonction des informations de configuration ; et
l'envoi (S206), par le dispositif de réseau, d'un message d'indication de surveillance au dispositif terminal, dans lequel le message d'indication de surveillance est configuré pour indiquer de sauter une surveillance de PDCCH sur un premier ensemble de cellules de service correspondant au dispositif de réseau ;
dans lequel les informations de configuration sont configurées pour indiquer au dispositif terminal de déterminer de ne pas sauter la surveillance de PDCCH sur une cellule de service cible du premier ensemble de cellules de service indiqué par le message d'indication de surveillance en fonction des informations de configuration, dans un cas où le dispositif terminal ne reçoit pas de réponse à la demande de planification provenant du dispositif de réseau,
dans lequel les informations de configuration comprennent en outre des troisièmes informations de configuration, les troisièmes informations de configuration sont configurées pour configurer le canal logique de liaison montante pour permettre d'ignorer le saut de la surveillance de PDCCH ou pour configurer le canal logique de liaison montante pour ne pas permettre d'ignorer le saut de la surveillance de PDCCH, et dans un cas où le canal logique de liaison montante prend en charge un service sensible à la latence, les troisièmes informations de configuration sont configurées pour configurer le canal logique de liaison montante pour permettre d'ignorer le saut de la surveillance de PDCCH ; et
dans un cas où le canal logique de liaison montante prend en charge un service non sensible à la latence, les troisièmes informations de configuration sont configurées pour configurer le canal logique de liaison montante pour ne pas permettre d'ignorer le saut de la surveillance de PDCCH.

10. Procédé selon l'une quelconque des revendications 8 et 9, dans lequel le message d'indication de surveillance indique en outre une durée du saut de PDCCH.

11. Procédé selon l'une quelconque des revendications 8 et 9, dans lequel les informations de configuration comprennent des informations de configuration de réception discontinue, DRX, les informations de configuration DRX sont configurées pour indiquer au dispositif terminal de surveiller de façon discontinue le PDCCH, et les informations de configuration DRX comprennent un cycle DRX long, un minuteur de durée de DRX et un minuteur d'inactivité de DRX.

12. Dispositif terminal, comprenant des moyens pour exécuter le procédé selon l'une quelconque des revendications 1 à 7.

13. Dispositif de réseau, comprenant des moyens pour exécuter le procédé selon l'une quelconque des revendications 8 à 11.
